# EUROPEAN PATENT APPLICATION

(11) **EP 4 576 871 A1**
(43) Date of publication of application: **25.06.2025**
(21) Application number: 23870355.7
(22) Date of filing: 14.09.2023
(51) Int. Cl.: H04W 28/08

(54) **COMMUNICATION METHOD AND COMMUNICATION APPARATUS**

(30) Priority: 28.09.2022 CN 202211193575
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Epping - Hermann - Fischer
(86) International application number: PCT/CN2023/118732
(87) International publication number: WO 2024/067118

(57) **Abstract**

This application provides a communication method and a communication apparatus. The method includes: A first network unit sends first information to a second network unit, where the first information includes first indication information, and the first indication information indicates a configuration type of a first radio bearer of a remote terminal device. In this way, the second network unit may determine, based on the configuration type of the first radio bearer, whether to provide a configuration of a first RLC bearer corresponding to the first radio bearer on a link between the remote terminal device and the second network unit, to provide correct configuration information of the radio bearer for the remote terminal device. This helps improve data transmission efficiency of the radio bearer, improve radio resource utilization of a mobile network system, and improve system performance.

## Description

This application claims priority to Chinese Patent Application No. 202211193575.0, filed with the China National Intellectual Property Administration on September 28, 2022 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

With the development of communication technologies, a sidelink user equipment-to-network relay (sidelink UE-to-Network Relay, SL U2N Relay) communication technology is proposed in new radio (new radio, NR). By using the SL U2N relay communication technology, a remote user equipment (remote UE) can communicate with a base station via a relay user equipment (relay UE) located within a service range of a network device. In addition, the remote user equipment may alternatively directly communicate with the base station. A link for communication between the remote user equipment and the base station via the relay user equipment may be referred to as an indirect link, and a link for direct communication between the remote device and the base station may be referred to as a direct link.

In a CU-DU split architecture, the base station is divided into a central unit (central unit, CU) and a distributed unit (distributed unit, DU). The DU is responsible for determining configurations corresponding to a radio bearer of the remote user equipment on the two links. However, when the two links exist between the DU and the remote user equipment, the DU may fail to correctly provide the configurations corresponding to the radio bearer.

### SUMMARY

Embodiments of this application provide a communication method and a communication apparatus. According to the method, a configuration corresponding to a radio bearer can be correctly provided for a remote terminal device. This helps improve data transmission efficiency of the radio bearer.

According to a first aspect, a communication method is provided. The method includes: A first network unit sends first information to a second network unit. The first information includes first indication information, the first indication information indicates a configuration type of a first radio bearer of a remote terminal device, and the configuration type is one of a first configuration type, a second configuration type, and a third configuration type. The first configuration type is that a radio bearer is configured on a first link, the second configuration type is that a radio bearer is configured on a second link, the third configuration type is that a radio bearer is configured on the first link and the second link, the first link is a link between the second network unit and the remote terminal device, and the second link is a link through which the second network unit is connected to the remote terminal device via a relay terminal device. The first network unit receives configuration information from the second network unit. The configuration information includes a configuration of a first radio link control RLC bearer and/or a configuration of a second RLC bearer that correspond/corresponds to the first radio bearer, the configuration of the first RLC bearer is a configuration of an RLC bearer of the first radio bearer on the first link, and the configuration of the second RLC bearer is a configuration of an RLC bearer of the first radio bearer on the second link. The first network unit sends the configuration information to the remote terminal device.

In this embodiment of this application, the first network unit may be a gNB-CU, the second network unit may be a gNB-DU, the first link may be a direct link between the gNB-DU and the remote terminal device, and the second link may be an indirect link between the gNB-DU and the remote terminal device. On the first link, the remote terminal device may communicate with the second network unit through a Uu interface. On the second link, the remote terminal device may communicate with the second network unit via the relay terminal device. The first information may be a second context modification request message that is of the remote terminal device and that is sent by the gNB-CU to the gNB-DU.

In this embodiment of this application, when the first radio bearer is newly set up or modified, the first network unit may indicate the configuration type of the first radio bearer to the second network unit, so that the second network unit determines whether to provide the configuration of the first RLC bearer corresponding to the first radio bearer, to correctly provide the configuration of the first radio bearer for the remote terminal device. This helps improve data transmission efficiency of the radio bearer of the remote terminal device. In addition, the remote terminal device may be connected to a base station through the two links, and the radio bearer is configured on the direct link, the indirect link, or the two links, so that coverage and radio resource utilization of an entire mobile network system can be improved, a delay can be reduced, and system performance can be improved.

With reference to the first aspect, in a possible implementation, the method further includes: The first network unit determines the configuration type of the first radio bearer.

With reference to the first aspect, in a possible implementation, the third configuration type includes that the radio bearer is configured to perform packet data convergence protocol duplication PDCP duplication or perform packet data convergence protocol split PDCP split.

It should be understood that, when the PDCP duplication is configured for the radio bearer, a data packet may be transmitted/delivered to an RLC entity/bearer on which a link is located, the data packet is duplicated once, and a data packet obtained through duplication is transmitted to an RLC entity/bearer on which another link is located. When the PDCP split is configured for the radio bearer, each data packet is randomly transmitted/delivered to an RLC entity/bearer of one of the links.

In this embodiment of this application, when the radio bearer is of the third configuration type, a data transmission rate of the radio bearer can be increased, and data transmission reliability of the radio bearer can be improved.

With reference to the first aspect, in a possible implementation, the method further includes: The first network unit sends second information to the second network unit and/or the remote terminal device. The second information indicates the second network unit to perform multi-path configuration or switching configuration for the remote terminal device.

In this embodiment of this application, the second information may be multi-path (multi-path) indication information. When the radio bearer is newly set up or modified, the second information indicates the second network unit and/or the remote terminal device to perform multi-path configuration or switching configuration, so that the second network unit and the remote terminal device can perform correct configuration. For example, when the second information indicates to perform multi-path configuration, the second network unit may establish only a new link to the remote terminal device, and may communicate with the remote terminal device through a plurality of links. When indicating to perform switching configuration, the second information indicates to disconnect an original link between the second network unit and the remote terminal device, and establish a new link.

With reference to the first aspect, in a possible implementation, the first information further includes second indication information, and the second indication information indicates to set up or reconfigure the second RLC bearer for the remote terminal device, or the second indication information indicates the second network unit to determine the configuration of the second RLC bearer.

In this embodiment of this application, when the first radio bearer is of the second configuration type or the third configuration type, the first network unit may send the second indication information to the second network unit, to indicate the second network unit to set up or reconfigure the second RLC bearer corresponding to the first radio bearer, or indicate the second network unit to determine the configuration of the second RLC bearer.

With reference to the first aspect, in a possible implementation, the first network unit sends first quality of service QoS information and/or second QoS information to the second network unit, the first QoS information indicates that the configuration of the first RLC bearer needs to meet the first QoS information, and the second QoS information indicates that the configuration of the second RLC bearer needs to meet the second QoS information.

With reference to the first aspect, in a possible implementation, the method further includes: The first network unit sends a configuration of a sidelink relay adaptation protocol SRAP layer on the second link to the remote terminal device. The configuration of the SRAP layer includes a mapping relationship between the first radio bearer and the second RLC bearer.

In this embodiment of this application, the first network unit may send the configuration of the SRAP layer to the remote terminal device, so that the remote terminal device configures the SRAP layer. This helps transmit data of the radio bearer on the correct second RLC bearer.

With reference to the first aspect, in a possible implementation, the first network unit is a central unit CU, and the second network unit is a distributed unit DU.

According to a second aspect, a communication method is provided. The method includes: A second network unit receives first information from a first network unit. The first information includes first indication information, the first indication information indicates a configuration type of a first radio bearer of a remote terminal device, and the configuration type of the first radio bearer is one of a first configuration type, a second configuration type, and a third configuration type. The first configuration type is that a radio bearer is configured on a first link, the second configuration type is that a radio bearer is configured on a second link, the third configuration type is that a radio bearer is configured on the first link and the second link, the first link is a link between the second network unit and the remote terminal device, and the second link is a link through which the second network unit is connected to the remote terminal device via a relay terminal device. The second network unit determines, based on the first indication information, whether to provide a configuration of a first RLC bearer corresponding to the first radio bearer. The configuration of the first RLC bearer is a configuration of an RLC bearer of the first radio bearer on the first link. The second network unit sends configuration information to the first network unit. When the second network unit determines to provide the configuration of the first RLC bearer, the configuration information includes the configuration of the first RLC bearer.

It should be understood that the first network unit may be a gNB-CU, the second network unit may be a gNB-DU, the first link may be a direct link between the gNB-DU and the remote terminal device, and the second link may be an indirect link between the gNB-DU and the remote terminal device. On the first link, the remote terminal device may communicate with the second network unit through a Uu interface. On the second link, the remote terminal device may communicate with the second network unit via the relay terminal device. The first information may be a second context modification request message that is of the remote terminal device and that is sent by the gNB-CU to the gNB-DU.

In this embodiment of this application, when the first radio bearer is newly set up or modified, the second network unit may determine, based on the configuration type of the first radio bearer, whether to provide the configuration of the first RLC bearer corresponding to the first radio bearer, to correctly provide the configuration of the first radio bearer for the remote terminal device. This helps improve data transmission efficiency of the radio bearer of the remote terminal device. In addition, the remote terminal device may be connected to a base station through the two links, and the radio bearer is configured on the direct link, the indirect link, or the two links, so that coverage and radio resource utilization of an entire mobile network system can be improved, a delay can be reduced, and system performance can be improved.

With reference to the second aspect, in a possible implementation, the third configuration type includes that the radio bearer is configured to perform PDCP duplication or PDCP split. With reference to the second aspect, in a possible implementation, the method further includes: The second network unit receives second information from the second network unit. The second information indicates to perform multi-path configuration or switching configuration for the remote terminal device.

With reference to the second aspect, in a possible implementation, the first information further includes second indication information. The second indication information indicates the second network unit to set up or reconfigure a second RLC bearer for the remote terminal device, or the second indication information indicates the second network unit to determine a configuration of the second RLC bearer. The configuration of the second RLC bearer is a configuration of an RLC bearer corresponding to the first radio bearer on the second link. The configuration information further includes the configuration of the second RLC bearer.

With reference to the second aspect, in a possible implementation, the method further includes: The second network unit receives first QoS information and/or second QoS information from the second network unit. The first QoS information indicates that the configuration of the first RLC bearer needs to meet the first QoS information, and the second QoS information indicates that the configuration of the second RLC bearer needs to meet the second QoS information.

With reference to the second aspect, in a possible implementation, the first network unit is a CU, and the second network unit is a DU.

According to a third aspect, a communication method is provided. The method includes: A remote terminal device receives configuration information from a first network unit via a second network unit. The configuration information includes a configuration of a first RLC bearer and/or a configuration of a second RLC bearer that correspond/corresponds to a first radio bearer of the remote terminal device, the configuration of the first RLC bearer is a configuration of an RLC bearer of the first radio bearer on a first link, the configuration of the second RLC bearer is a configuration of an RLC bearer of the first radio bearer on a second link, the first link is a link between the second network unit and the remote terminal device, the second link is a link through which the second network unit is connected to the remote terminal device via a relay terminal device, and a configuration type of the first radio bearer is one of a first configuration type, a second configuration type, and a third configuration type. The first configuration type is that a radio bearer is configured on the first link, the second configuration type is that a radio bearer is configured on the second link, and the third configuration type is that a radio bearer is configured on the first link and the second link. The remote terminal device sets up the first RLC bearer and/or the second RLC bearer based on the configuration information. It should be understood that the first network unit may be a gNB-CU, the second network unit may be a gNB-DU, the first link may be a direct link between the gNB-DU and the remote terminal device, and the second link may be an indirect link between the gNB-DU and the remote terminal device. On the first link, the remote terminal device may communicate with the second network unit through a Uu interface. On the second link, the remote terminal device may communicate with the second network unit via the relay terminal device.

In this embodiment of this application, for radio bearers of different configuration types, the remote terminal device may receive correct configuration information, to configure the radio bearers.

With reference to the third aspect, in a possible implementation, the method further includes: The remote terminal device receives second information from the first network unit. The second information indicates to perform multi-path configuration or switching configuration.

With reference to the third aspect, in a possible implementation, the method further includes: The remote terminal device receives a configuration that is of an SRAP layer on the second link and that is sent by the first network unit. The configuration of the SRAP layer includes a mapping relationship between the first radio bearer and the second RLC bearer.

With reference to the third aspect, in a possible implementation, the first network unit is a CU, and the second network unit is a DU.

According to a fourth aspect, a communication method is provided. The method includes:
A first network unit receives first configuration information from a third network unit, and sends the first configuration information to a fourth network unit. The first configuration information is for configuring a radio bearer of a remote terminal device on a third link, and the third link is a link between the remote terminal device and the third network unit.

The first network unit receives third information from the fourth network unit. The third information includes the first configuration information and second configuration information, the second configuration information is for configuring the radio bearer of the remote terminal device on a fourth link, and the fourth link is a link between the remote terminal device and the fourth network unit.

The remote terminal device communicates with the third network unit on the third link via a relay terminal device. Alternatively, the remote terminal device communicates with the third network unit on the fourth link via a relay terminal device.

It should be understood that the first network unit may be a gNB-CU, the third network unit may be a gNB-DU 1, and the fourth network unit may be a gNB-DU 2. The third link may be a communication link between the remote terminal device and the gNB-DU 1, the third link may be a communication link between the remote terminal device and the gNB-DU 2, and there is at least one indirect link in the third link and the fourth link, namely, a link for communicating with a DU via the relay terminal device. In other words, the third link on a third network unit side may be a direct link, or may be an indirect link.

It should be understood that, when the radio bearer of the remote terminal device is newly set up or modified, the first network unit may receive the first configuration information sent by the third network unit and the second configuration information sent by the fourth network unit, but the first network unit cannot parse the two pieces of configuration information. Consequently, only one piece of configuration information may be sent to the remote terminal device. **In** other words, the remote terminal device may fail to receive complete configuration information of the two links, and consequently cannot correctly configure the radio bearer.

**In** this embodiment of this application, the first network unit may send the first configuration information of the third network unit to the fourth network unit, to receive the third information including the first configuration information and the second configuration information from the fourth network unit, so as to send a complete configuration of the radio bearer to the remote terminal device.

With reference to the fourth aspect, in a possible implementation, the method further includes: The first network unit sends first indication information to the third network unit. The first indication information indicates the third network unit to determine the first configuration information.

The first network unit sends second indication information to the fourth network unit. The second indication information indicates the fourth network unit to determine the second configuration information.

It should be understood that the first network unit may separately send the indication information to the third network unit and the fourth network unit, to separately indicate the third network unit and the fourth network unit to provide the first configuration information and the second configuration information. The first configuration information includes a configuration corresponding to the radio bearer of the remote terminal device on the third link, and the second configuration information includes a configuration corresponding to the radio bearer of the remote terminal device on the fourth link.

With reference to the fourth aspect, in a possible implementation, the method further includes: The first network unit determines that the third network unit or the fourth network unit is a primary network unit, or the first network unit determines that the third link or the fourth link is a primary link. Alternatively, the first network unit determines that the third network unit or the fourth network unit is a secondary network unit, or the first network unit determines that the third link or the fourth link is a secondary link.

It should be understood that the first network unit may select one of the third network unit and the fourth network unit as the primary network unit or the secondary network unit, or the first network unit may select one of the third link and the fourth link as the primary link or the secondary link.

**In** some embodiments, the first network unit always sends, to the primary network unit, configuration information generated by the secondary network unit, and the primary network unit generates the third information and sends the third information to the first network unit.

**In** some other embodiments, the first network unit always sends, to the secondary network unit, configuration information generated by the primary network unit, and the secondary network unit generates the third information and sends the third information to the first network unit.

**In** some embodiments, the first network unit always sends, to a network unit on a secondary link side, configuration information generated by a network unit on a primary link side, and the network unit on the secondary link side generates the third information and sends the third information to the first network unit.

In some other embodiments, the first network unit always sends, to a network unit on a primary link side, configuration information generated by a network unit on a secondary link side, and the network unit on the primary link side generates the third information and sends the third information to the first network unit.

With reference to the fourth aspect, in a possible implementation, the first network unit sends fifth information to the third network unit or the fourth network unit. The fifth information indicates that the third network unit or the fourth network unit is the primary network unit, or the fifth information indicates that the third link or the fourth link is the primary link.

Alternatively, the fifth information indicates that the third network unit or the fourth network unit is the secondary network unit, or the fifth information indicates that the third link or the fourth link is the secondary link.

It should be understood that the first network unit may indicate that one of the third network unit and the fourth network unit is the primary network unit or the secondary network unit, or the first network unit may indicate that one of the third link and the fourth link is the primary link or the secondary link.

With reference to the fourth aspect, in a possible implementation, the method further includes: The first network unit sends sixth information to the third network unit and the fourth network unit. The sixth information indicates to perform multi-path configuration or switching configuration for the remote terminal device.

With reference to the fourth aspect, in a possible implementation, the method further includes: The first configuration information includes configurations of one or more third RLC bearers on the third link, and the second configuration information includes configurations of one or more fourth RLC bearers on the fourth link.

With reference to the fourth aspect, in a possible implementation, the first network unit sends a configuration of an SRAP layer on the fourth link to the remote terminal device. The configuration of the SRAP layer includes a mapping relationship between each radio bearer of the remote terminal device and the one or more fourth RLC bearers.

With reference to the fourth aspect, in a possible implementation, the first network unit is a CU, the third network unit is a first DU, and the fourth network unit is a second DU.

According to a fifth aspect, a communication method is provided. The method includes: A fourth network unit receives first configuration information from a third network unit. The first configuration information is for configuring a radio bearer of a remote terminal device on a third link, and the third link is a link through which the third network unit is connected to the remote terminal device.

The fourth network unit sends third information to a first network unit. The third information includes the first configuration information and second configuration information, the second configuration information is for configuring the radio bearer of the remote terminal device on a fourth link, and the fourth link is a link between the fourth network unit and the remote terminal device.

The remote terminal device communicates with the third network unit on the third link via a relay terminal device. Alternatively, the remote terminal device communicates with the third network unit on the fourth link via a relay terminal device.

It should be understood that, when the radio bearer of the remote terminal device is newly set up or modified, the first network unit may receive the first configuration information sent by the third network unit and the second configuration information sent by the fourth network unit, but the first network unit cannot parse the two pieces of configuration information. Consequently, only one piece of configuration information may be sent to the remote terminal device. In other words, the remote terminal device may fail to receive complete configuration information of the two links, and consequently cannot correctly configure the radio bearer.

In this embodiment of this application, the fourth network unit may receive the first configuration information from the third network unit, and generate the third information including the first configuration information and the second configuration information, to send a complete configuration of the radio bearer to the remote terminal device.

With reference to the fifth aspect, in a possible implementation, the method further includes: The fourth network unit receives first indication information from the first network unit. The first indication information indicates the fourth network unit to determine the second configuration information.

With reference to the fifth aspect, in a possible implementation, the method further includes: The fourth network unit receives fifth information from the first network unit. The fifth information indicates that the fourth network unit is a primary network unit, or the fifth information indicates that the fourth link is a primary link.

Alternatively, the fifth information indicates that the fourth network unit is a secondary network unit, or the fifth information indicates that the fourth link is a secondary link.

With reference to the fifth aspect, in a possible implementation, the third network unit receives sixth information. The sixth information indicates to perform multi-path configuration or switching configuration for the remote terminal device.

With reference to the fifth aspect, in a possible implementation, the first network unit is a CU, the third network unit is a first DU, and the fourth network unit is a second DU.

According to a sixth aspect, a communication method is provided. The method includes: A remote terminal device receives fourth information from a first network unit. The fourth information includes first configuration information and second configuration information, the first configuration information is for configuring a radio bearer of the remote terminal device on a third link, the second configuration information is for configuring the radio bearer of the remote terminal device on a fourth link, the third link is a link between the remote terminal device and a third network unit, and the fourth link is a link through which the remote terminal device is connected to a fourth network unit via a relay terminal device.

The remote terminal device configures the radio bearer of the remote terminal device based on the first configuration information and the second configuration information.

With reference to the sixth aspect, in a possible implementation, the method further includes: The remote terminal device receives sixth information from the first network unit. The sixth information indicates to perform multi-path configuration or switching configuration.

With reference to the sixth aspect, in a possible implementation, the method further includes:
The first configuration information includes configurations of one or more third RLC bearers on the third link, and the second configuration information includes configurations of one or more fourth RLC bearers on the fourth link.

That the remote terminal device sets up the radio bearer of the remote terminal device based on the first configuration information and the second configuration information includes:
The remote terminal device sets up the one or more third RLC bearers based on the configurations of the one or more third RLC bearers.

The remote terminal device sets up the one or more fourth RLC bearers based on the configurations of the one or more fourth RLC bearers.

With reference to the sixth aspect, in a possible implementation, the method further includes:
The remote terminal device receives a configuration that is of an SRAP layer on the fourth link and that is sent by the first network unit. The configuration of the SRAP layer includes a mapping relationship between each radio bearer of the remote terminal device and the one or more fourth RLC bearers.

With reference to the sixth aspect, in a possible implementation, the first network unit is a CU, the third network unit is a first DU, and the fourth network unit is a second DU.

According to a seventh aspect, a communication method is provided. The method includes: A first network unit determines a configuration type of a first radio bearer of a remote terminal device. The configuration type is one of a first configuration type, a second configuration type, and a third configuration type. The first configuration type is that a radio bearer is configured on a first link, the second configuration type is that a radio bearer is configured on a second link, the third configuration type is that a radio bearer is configured on the first link and the second link, the first link is a link between a second network unit and the remote terminal device, and the second link is a link through which the second network unit is connected to the remote terminal device via a relay terminal device. The first network unit sends first information to the second network unit. The first information indicates the second network unit to provide a configuration of an RLC bearer corresponding to the first radio bearer, and the configuration of the RLC bearer is related to the configuration type of the first radio bearer. The first network unit receives configuration information from the second network unit. The configuration information includes the configuration of the RLC bearer. The first network unit sends the configuration information to the remote terminal device.

It should be understood that the first network unit may be a gNB-CU, the second network unit may be a gNB-DU, the first link may be a direct link between the gNB-DU and the remote terminal device, and the second link may be an indirect link between the gNB-DU and the remote terminal device. On the first link, the remote terminal device may communicate with the second network unit through a Uu interface. On the second link, the remote terminal device may communicate with the second network unit via the relay terminal device. The first information may be a second context modification request message that is of the remote terminal device and that is sent by the gNB-CU to the gNB-DU.

It should be understood that the configuration of the RLC bearer corresponding to the first radio bearer is related to the configuration type of the first radio bearer. For example, if the first radio bearer is a radio bearer of the first configuration type, the configuration of the RLC bearer includes only a configuration of a first RLC bearer on the first link. If the first radio bearer is a radio bearer of the second configuration type, the configuration of the RLC bearer includes only a configuration of a second RLC bearer on the second link. If the first radio bearer is a radio bearer of the third configuration type, the configuration of the RLC bearer includes a configuration of a first RLC bearer and a configuration of a second RLC bearer.

It should be understood that the configuration of the first RLC bearer is a configuration of an RLC bearer corresponding to the first radio bearer on the first link, and the configuration of the second RLC bearer is a configuration of an RLC bearer corresponding to the first radio bearer on the second link.

It should be understood that, if the first radio bearer is a radio bearer of the third configuration type, the first radio bearer may correspond to the first RLC bearer and the second RLC bearer.

In this embodiment of this application, when the first radio bearer is newly set up or modified, the first network unit may indicate the second network unit to provide a configuration of an RLC bearer related to the configuration type of the first radio bearer, so that the second network unit can correctly provide the configuration of the RLC bearer corresponding to the first radio bearer. In addition, the remote terminal device may be connected to a base station through the two links, and the radio bearer is configured on the direct link, the indirect link, or the two links, so that coverage and radio resource utilization of an entire mobile network system can be improved, a delay can be reduced, and system performance can be improved.

With reference to the seventh aspect, in a possible implementation, the first information includes first indication information, and the first indication information indicates the configuration type of the first radio bearer.

With reference to the seventh aspect, in a possible implementation, the configuration of the RLC bearer includes the configuration of the first RLC bearer, and the first RLC bearer is configured on the first link.

With reference to the seventh aspect, in a possible implementation, the first information includes first indication information, and the first indication information is used by the second network unit to determine whether the configuration of the first RLC bearer needs to be provided.

With reference to the seventh aspect, in a possible implementation, the configuration of the RLC bearer includes the configuration of the first RLC bearer, the first RLC bearer is set on the first link, the first information includes first indication information, and the first indication information indicates the second network unit to determine the configuration of the first RLC bearer.

With reference to the seventh aspect, in a possible implementation, the configuration of the RLC bearer includes the configuration of the second RLC bearer, the second RLC bearer is set on the first link, the first information further includes second indication information, and the second indication information indicates the second network unit to determine the configuration of the second RLC bearer.

According to an eighth aspect, a communication method is provided. The method includes: A first network unit sends first information to a second network unit. The first information includes first indication information, the first indication information indicates the second network unit to determine a configuration of a first radio link control RLC bearer, the first RLC bearer is an RLC bearer corresponding to a first radio bearer on a first link, and the first link is a link between the second network unit and a remote terminal device. The first network unit receives configuration information from the second network unit. The configuration information includes the configuration of the first RLC bearer corresponding to the first radio bearer. The first network unit sends the configuration information to the remote terminal device.

With reference to the eighth aspect, in a possible implementation, the first indication information indicates that the first radio bearer is configured on the first link.

With reference to the eighth aspect, in a possible implementation, the method further includes: The first network unit determines that the first radio bearer is configured on the first link.

With reference to the eighth aspect, in a possible implementation, the method further includes: The first network unit sends second information to the second network unit and/or the remote terminal device. The second information indicates the second network unit to perform multi-path configuration or switching configuration for the remote terminal device.

With reference to the eighth aspect, in a possible implementation, the first information further includes second indication information, the second indication information indicates the second network unit to determine a configuration of a second RLC bearer corresponding to the first radio bearer, the configuration of the second RLC bearer is an RLC bearer on a link between the remote terminal device and a relay terminal device, and the remote terminal device is connected to the second network unit via the relay terminal device.

According to a ninth aspect, a communication system is provided. The communication system includes a first network unit, a second network unit, and a remote terminal device. The first network unit is configured to perform the communication method in any possible implementation of the first aspect, the second network unit is configured to perform the communication method in any possible implementation of the second aspect, and the remote terminal device is configured to perform the communication method in any possible implementation of the third aspect.

According to a tenth aspect, a communication apparatus is provided. The communication apparatus may include a module or a unit configured to implement any one of the first aspect or the fourth aspect and the possible implementations of the first aspect or the fourth aspect.

According to an eleventh aspect, a communication apparatus is provided. The communication apparatus may include a module or a unit configured to implement any one of the second aspect or the fifth aspect and the possible implementations of the second aspect or the fifth aspect.

According to a twelfth aspect, a communication apparatus is provided. The communication apparatus may include a module or a unit configured to implement any one of the third aspect or the sixth aspect and the possible implementations of the third aspect or the sixth aspect.

According to a thirteenth aspect, a computer-readable storage medium is provided. The computer-readable storage medium stores a computer program. When the computer program is run on a computer, the computer is enabled to perform the communication method according to any one of the first aspect or the fourth aspect and the possible implementations of the first aspect or the fourth aspect, perform the communication method according to any one of the second aspect or the fifth aspect and the possible implementations of the second aspect or the fifth aspect, or perform the communication method according to any one of the third aspect or the sixth aspect and the possible implementations of the third aspect or the sixth aspect.

According to a fourteenth aspect, a computer program product is provided. The computer program product includes computer program instructions. When the computer program instructions are run on a computer, the computer is enabled to perform the communication method according to any one of the first aspect or the fourth aspect and the possible implementations of the first aspect or the fourth aspect, perform the communication method according to any one of the second aspect or the fifth aspect and the possible implementations of the second aspect or the fifth aspect, or perform the communication method according to any one of the third aspect or the sixth aspect and the possible implementations of the third aspect or the sixth aspect.

According to a fifteenth aspect, a communication apparatus is provided. The apparatus includes at least one processor. The at least one processor is configured to execute a computer program or instructions stored in a memory, to perform the communication method according to any one of the first aspect or the fourth aspect and the possible implementations of the first aspect or the fourth aspect, perform the communication method according to any one of the second aspect or the fifth aspect and the possible implementations of the second aspect or the fifth aspect, or perform the communication method according to any one of the third aspect or the sixth aspect and the possible implementations of the third aspect or the sixth aspect.

### BRIEF DESCRIPTION OF DRAWINGS

FIG. 1 is a diagram of a communication system applicable to an embodiment of this application;
FIG. 2 is a diagram of an example of a protocol stack architecture applicable to an embodiment of this application;
FIG. 3 is a diagram of an example of another protocol stack architecture applicable to an embodiment of this application;
FIG. 4 is a diagram of a network structure applicable to an embodiment of this application;
FIG. 5 is a diagram of a user plane protocol stack architecture in a CU-DU split architecture;
FIG. 6 is a diagram of a control plane protocol stack architecture in a CU-DU split architecture;
FIG. 7 is a diagram of communication between a remote terminal device and a base station in a CU-DU split architecture;
FIG. 8 is a schematic flowchart of a communication method according to an embodiment of this application;
FIG. 9 is a schematic flowchart of another communication method according to an embodiment of this application;
FIG. 10 is a schematic flowchart of a communication method according to an embodiment of this application;
FIG. 11 is a schematic flowchart of another communication method according to an embodiment of this application;
FIG. 12 is a schematic flowchart of a communication method according to an embodiment of this application;
FIG. 13 is a schematic flowchart of another communication method according to an embodiment of this application; and
FIG. 14 is a block diagram of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in this application are merely used for differentiation for ease of description, and are not for limiting the scope of this application. Sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that data termed in such a way is interchangeable in a proper circumstance, so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

The terminal device in embodiments of this application may be a user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands or smart jewelry for monitoring physical signs.

In addition, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between one thing and another. A specific form of the terminal device is not limited in this application.

It should be understood that, in embodiments of this application, the terminal device may be an apparatus configured to implement a function of the terminal device, or may be an apparatus that can support the terminal device in implementing the function, for example, a chip system. The apparatus may be mounted in the terminal. In embodiments of this application, the chip system may be formed by a chip, or may include the chip and another discrete component.

The network device in embodiments of this application may be any device with a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; or may be a gNB or a transmission point (TRP or TP) in a 5G such as NR system, or one or a group of (including a plurality of antenna panels) antenna panels of a base station in the 5G system; or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, it may also be considered that higher layer signaling, such as RRC layer signaling, may be sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus that can support the network device in implementing the function, for example, a chip system. The apparatus may be mounted in the network device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

It should be understood that this application may be applied to an independently deployed 5G or LTE system, or may be applied to a non-independently deployed 5G or LTE system, for example, a DC scenario, including evolved universal terrestrial radio access-new radio dual connectivity (evolved universal terrestrial radio access-NR dual connectivity, EN-DC) or the like, and a carrier aggregation (carrier aggregation, CA) scenario.

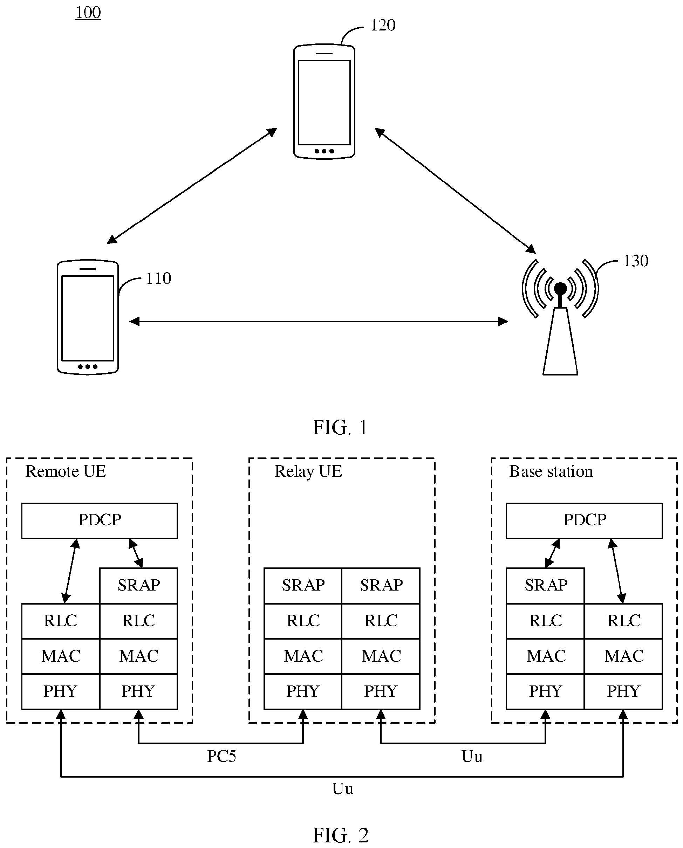

For ease of understanding of embodiments of this application, a communication system applicable to embodiments of this application is first described in detail with reference to FIG. 1.

FIG. 1 is a diagram of a communication system 100 applicable to an embodiment of this application. As shown in FIG. 1, the communication system 100 may include at least one remote UE 110, at least one relay UE 120, and a network device 130. The remote UE 110 may communicate with the network device 130 through both a direct link and an indirect link (or referred to as a relay link). On the direct link, the remote UE 110 may communicate with the network device 130 through a Uu interface. On the indirect link, the remote UE 110 may communicate with the network device 130 via the relay UE 120. The remote UE 110 may communicate with the relay UE 120 through a PC5 interface corresponding to a sidelink, or may communicate with the relay UE 120 through a non-3GPP (non-3GPP) link. The remote UE 110 may receive and send same or different data through both the two links, to improve a throughput rate and reliability of data receiving and sending.

It should be understood that, in embodiments of this application, in addition to directly communicating with a network device (for example, a base station), a UE may communicate with the base station via another UE. For example, in an internet of vehicles scenario, a relay UE may serve as a relay of a remote UE, so that the remote UE can communicate with the base station via the relay UE. This technology is referred to as a sidelink user equipment-to-network relay (sidelink UE-to-Network relay, SL U2N relay) technology, or may be referred to as a relay (relay) technology.

In embodiments of this application, the remote user equipment may also be referred to as a remote terminal device, and the relay user equipment may also be referred to as a relay terminal device. The relay terminal device may be a terminal device that provides network access for the remote terminal device, and the relay terminal device provides a relay service for the remote terminal device. The relay service may include: Information sent by the remote terminal device to the network device may be forwarded by the relay terminal device to the network device, and information sent by the network device to the remote terminal device may also be forwarded by the relay terminal device to the remote terminal device.

In a wireless communication system, two terminal apparatuses may directly communicate with each other without using a network device. This communication manner is referred to as sidelink (sidelink) communication. A link between the two terminal apparatuses is referred to as a sidelink, for example, the communication link between the remote terminal device 110 and the relay terminal device 120.

In a sidelink communication scenario, two terminal devices that communicate with each other support transmission modes such as unicast, multicast, and broadcast. In a process of establishing a unicast connection, a source UE sends a direct communication request (direct communication request, DCR) message to a target UE, where the direct communication request message carries layer 2 identifiers (layer 2 identifiers, L2 IDs) and user information (user info) of the source UE and the target UE, and carries some information related to an upper application layer. After receiving the DCR message, the target UE determines, based on user info in the DCR message, whether the target UE can receive a direct communication request. If the target UE can receive the direct communication request, the target UE returns a direct communication accept (direct communication accept, DCA) message to the source UE; otherwise, the target UE returns a reject (reject) message to the source UE. For example, on the indirect link, the remote terminal device 110 may establish a unicast connection to the relay terminal device 120.

In one time of unicast communication, a subheader of each sidelink media access control protocol data unit (media access control protocol data Unit, MAC PDU) may include a source L2 ID and a destination L2 ID, so that data can be transmitted from a transmit end (for example, the source UE) to a correct receive end (for example, the target UE).

FIG. 2 is a diagram of an example of a protocol stack architecture applicable to an embodiment of this application. As shown in FIG. 2, the protocol stack architecture may include a packet data convergence protocol (packet data convergence protocol, PDCP) layer, an SRAP layer (sidelink relay adaptation protocol layer), a radio link control (radio link control, RLC) layer, a media access control (media Access control, MAC) layer, and a physical (physical, PHY) layer.

In some protocol stack architectures, a service data adaptation protocol (service data adaptation protocol, SDAP) layer (not shown in FIG. 2) may be included above the PDCP layer. In some other protocol stack architectures, for example, in a control plane protocol stack architecture, a radio resource control (radio resource control, RRC) layer (not shown in FIG. 2) may be included above the PDCP layer. The PHY layer is located at a bottom layer, the MAC layer, the RLC layer, and the PDCP layer are located at an intermediate layer, and the RRC layer is located at a higher layer.

A service data adaptation protocol SDAP entity receives a data packet from an application layer, where the data packet may be a data packet from a service. On a wireless network side, a service is represented in different forms, and may be in a form of a flow (Quality of Service flow, QoS flow), a form of a bearer formed by mapping to a PDCP entity, or a form of a logical channel.

The SDAP entity may encapsulate the data packet, add an SDAP packet header to the data packet, and then map an obtained data packet to a packet data convergence protocol PDCP entity. The PDCP entity receives the data packet encapsulated by the SDAP entity, and performs header compression and decompression, encryption and decryption, integrity protection, integrity check, lower-layer service data unit SDU (Service Data Unit, SDU) duplication detection, and the like on data, to further complete transmitting the data to a radio link control RLC layer entity. A main function of the PDCP layer includes a security processing function. The security processing function may include data encryption/decryption, integrity protection/check, and the like. The encryption and integrity protection correspond to a transmit end, and the decryption and integrity check correspond to a receive end. For example, in downlink transmission, on a user plane, after grouping IP data from an upper layer, the PDCP layer decrypts an IP data packet, and then performs delivery to the RLC layer; and on a control plane, the PDCP layer provides a signaling transmission service for the upper RRC layer and implements encryption and integrity protection for RRC signaling. Similarly, in uplink transmission, on the user plane, the PDCP layer may encrypt an uplink data packet; and on the control plane, the PDCP layer may implement decryption and integrity check for RRC signaling.

The RLC entity receives the data packet from the PDCP entity and performs data transmission. The RLC entity may complete segmentation and reassembly of a service data unit RLC SDU, duplication detection and protocol error detection of the RLC SDU, and the like. In addition, it should be noted that a protocol data unit PDU (Protocol Data Unit, PDU) is a data unit transmitted between peer layers. For example, an RLC PDU is a data unit exchanged between an RLC layer of the transmit end and an RLC layer of the receive end. An SDU is a service data unit, is also referred to as a service data unit, and is a data set of a user service at a specified layer. When the SDU is transmitted to a same protocol layer of a receiver, data does not change. Then, after the SDU is delivered to a lower layer, the lower layer encapsulates the SDU in a PDU and sends the PDU. The SDU is an information unit transmitted from a higher protocol layer to a lower protocol layer. SDUs at an Nth layer one-to-one correspond to PDUs at an upper layer. Usually, a transmitter adds protocol control information PCI (Protocol Control Information, PCI) to a SDU delivered by a user and encapsulates the SDU into a PDU. A receiver removes the PCI to decapsulate the PDU, restores the SDU, and then sends the SDU to a receiver user. However, if bandwidth of a lower-layer channel cannot satisfy an SDU transmission requirement, one SDU needs to be divided into a plurality of segments, and the segments are separately encapsulated into PDUs for sending. This is SDU segmentation. Then, the receiver decapsulates the PDUs, and reassembles the PDUs into the SDU.

A channel between the RLC layer and the media access control MAC layer is referred to as a logical channel (Logical Channel, LCH). A logical channel type set provides different types of data transmission services for a MAC entity, and the logical channel may be identified at the PDCP layer, the RLC layer, and the MAC layer. The MAC entity provides a data transmission service on the logical channel, receives the data packet from the RLC entity, and implements mapping from the logical channel to a transport channel. The MAC entity receives service data units MAC SDUs from a plurality of logical channels, and completes multiplexing and demultiplexing of the MAC SDUs. A protocol data unit MAC PDU of the MAC entity is a data unit transmitted inside the MAC entity. In addition, the MAC entity can further complete management on priorities of different logical channels LCP (Logic Channels Priority, LCP) of a same receive end device, priority management performed between different receive end devices through dynamic scheduling, an error correction function based on a HARQ (Hybrid Automatic Repeat reQuest, HARQ) mechanism, and the like. The LCP means a process in which the MAC entity allocates resources to different logical channels based on sizes of the transmission resources and priorities of the logical channels. After an LCP process ends, zero or more resources are allocated to each logical channel. In a conventional protocol, after a resource is allocated to each logical channel, data packets are placed on the allocated resource in order.

There is a transport channel between the MAC layer and the physical layer, and the physical layer provides a data service for a higher layer in a form of a transport channel. In addition, for data from an upper-layer transport channel and control information at the physical layer, the physical layer performs procedures such as cyclic redundancy check (Cyclic Redundancy Check, CRC), code block segmentation, channel coding, rate matching, and code block connection, then performs operations such as scrambling, modulation, layer mapping, and precoding, and finally perform sending over an air interface.

To satisfy service quality requirements of different types of services of a terminal device, one or more radio bearers (radio bearers, RBs) are introduced to a wireless network. The radio bearer includes a data radio bearer (data radio bearer, DRB) and a signaling radio bearer (signaling radio bearer, SRB), and is for transmitting different types of service data (including control plane signaling and user plane data) between a UE and a base station.

In a sidelink communication scenario, UEs communicate with each other by using a sidelink radio bearer (sidelink radio bearer, SL RB), including a sidelink data radio bearer (sidelink data radio bearer, SL DRB) and a sidelink signaling radio bearer (sidelink signaling radio bearer, SL SRB).

A configuration of an RLC bearer is a configuration corresponding to an RB at a lower layer, and specifically includes configurations of resources such as the RLC entity and the logical channel. One RLC bearer is associated with one logical channel at the MAC layer, and one RLC bearer is associated with one PDCP entity. In other words, one RLC bearer serves one radio bearer RB.

As shown in FIG. 2, a communication link including a remote UE, a relay UE, and a base station is an indirect link. On the indirect link, between the remote UE and the base station, there is an end-to-end PDCP layer, but there is no end-to-end RLC layer, MAC layer, or PHY layer. A data packet of the remote UE may be relayed and forwarded below a PDCP layer of the relay UE. After an RLC bearer for relay on a PC5 interface is set up between the remote UE and the relay UE, and an RLC bearer for relay on a Uu interface is set up between the relay UE and the base station, data transmission between the remote UE and the base station may be implemented. In other words, the relay UE maintains only the RLC bearer for relay.

A link for direct communication between the remote UE and the base station through a Uu interface is a direct link. On the direct link, between the remote UE and the base station, there is an end-to-end PDCP layer, and there are also an end-to-end RLC layer, MAC layer, and PHY layer. When the data packet of the remote UE is delivered downward from the PDCP layer, data transmission is directly performed by using an RLC bearer on the corresponding Uu interface between the remote UE and the base station.

In embodiments of this application, for ease of description, the RLC bearer for relay on the PC5 interface is referred to as a PC5 relay RLC bearer, or may be referred to as a PC5 relay RLC channel; the RLC bearer for relay on the Uu interface is referred to as a Uu relay RLC bearer, or may be referred to as a Uu relay RLC channel; and the RLC bearer between the remote UE and the base station is referred to as a Uu RLC bearer.

As shown in FIG. 2, in the architecture, the SRAP layer (sidelink relay adaptation protocol layer) is added between the RLC layer and the PDCP layer. A main function of the SRAP layer (or referred to as an adaptation layer) is multiplexing and demultiplexing of radio bearers, in other words, supporting multiplexing of different radio bearers on one RLC bearer for relay and a corresponding demultiplexing process. For example, data of a plurality of radio bearers of one remote UE may be multiplexed on one PC5 relay RLC bearer. For another example, in a scenario in which one relay UE is connected to a plurality of remote UEs, data of a plurality of radio bearers of different remote UEs may be multiplexed on one Uu relay RLC bearer. For another example, during downlink transmission, an SRAP layer of the base station may multiplex data of a plurality of radio bearers of one or more remote UEs on one Uu relay RLC bearer.

Before performing data transmission on the indirect link, the base station further performs SRAP layer configuration on the remote UE and the relay UE. Specifically, a configuration of an SRAP layer on a remote UE side includes a mapping relationship between a radio bearer and a PC5 relay RLC bearer, and a configuration of an SRAP layer on a relay UE side includes a mapping relationship between a radio bearer and a Uu/PC5 relay RLC bearer.

In a downlink transmission process on the indirect link, the SRAP layer of the base station receives the data packet of the remote UE from a PDCP layer, adds ID information of the remote UE and ID information of a radio bearer (for example, an SRB ID or a DRB ID) to an SRAP packet header, and then delivers an obtained data packet to the Uu relay RLC bearer. After receiving the data packet from the Uu relay RLC bearer, an adaptation layer of the relay UE may deliver the data packet to a correct PC5 relay RLC bearer based on the mapping relationship that is between the radio bearer and the PC5 relay RLC bearer and that is configured by the base station. After receiving the data packet from the PC5 relay RLC bearer, the remote UE delivers, based on the ID information of the radio bearer in the SRAP packet header, the data packet to a corresponding PDCP layer for processing. An uplink transmission process on the indirect link is similar to this.

The ID information such as a local ID of the remote UE may be allocated by the base station to the remote UE. The ID information allocated by the base station to the remote UE is unique under the base station (ID information of remote UEs connected to a same base station is different), or is unique under the relay UE (ID information of remote UEs connected to a same relay UE is different).

In a possible implementation, after the remote UE establishes a unicast connection to the relay UE, the relay UE sends an RRC message, for example, a SidelinkUEInformationNR (SUI) message, to the base station, to request the base station to allocate a local ID to the remote UE.

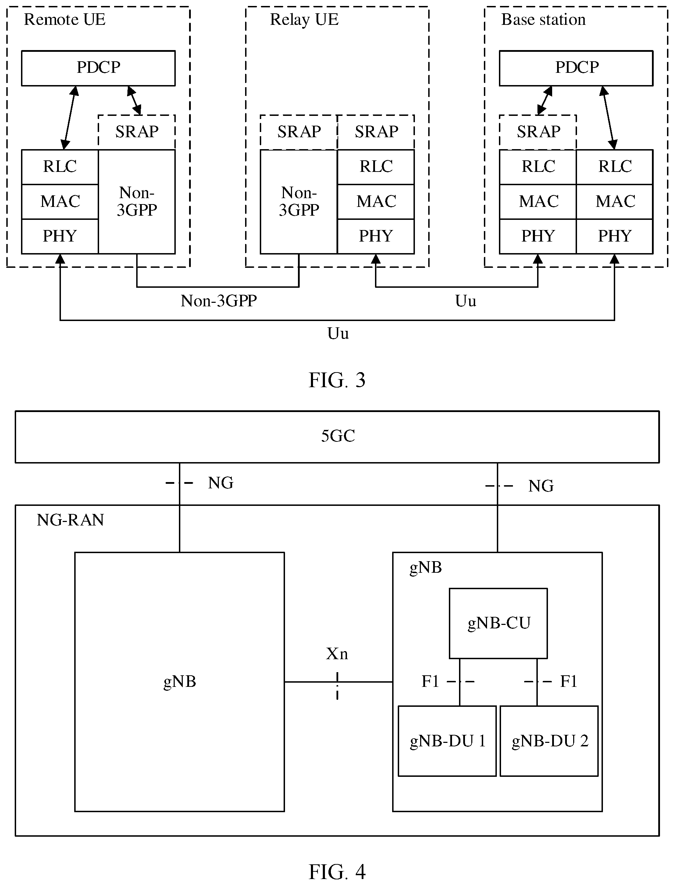

FIG. 3 is a diagram of an example of another protocol stack architecture applicable to an embodiment of this application. As shown in FIG. 3, a remote UE may communicate with a relay UE through a non-3 GPP link. An SRAP layer on the link between the remote UE and the relay UE or on a link between the relay UE and a base station is an optional configuration, and may be selected based on a multiplexing requirement of a radio bearer of the remote UE.

FIG. 4 is a diagram of a network structure applicable to an embodiment of this application. As shown in FIG. 4, a next generation radio access network (Next Generation Radio Access Network, NG-RAN) includes one or more gNBs connected to a 5G core (5G core) network. One gNB may be divided into a central unit (Central unit, CU) and a distributed unit (Distributed Unit, DU). In other words, one gNB may be divided into one gNB-CU and one or more gNB-DUs. One gNB-DU can be connected to only one gNB-CU. The CU may further include a form in which a control plane (control plane, CP) (referred to as a CU-CP in this specification) and a user plane (user plane, UP) (referred to as a CU-UP in this specification) are split. For example, the CU may include one CU-CP and one or more CU-UPs. The network structure is also referred to as a CU-DU split architecture.

In the CU-DU split architecture, the gNB-CU is responsible for RRC, SDAP, and PDCP protocol layers, and the gNB-DU is responsible for RLC, MAC, and PHY protocol layers. Further, for the control plane, a gNB-CU-CP is responsible for the RRC and a PDCP entity corresponding to an SRB; and for the user plane, a gNB-CU-UP is responsible for the SDAP and a PDCP entity corresponding to a DRB.

In the network structure shown in FIG. 4, network elements may communicate with each other through interfaces shown in FIG. 4. For example, the gNB may interact with the 5GC through an NG interface, two gNBs may interact with each other through an Xn interface, and the gNB-CU may interact with the gNB-DU through an F1 interface.

It should be understood that the foregoing network structure applied to this embodiment of this application is merely an example for description, and a network structure applicable to embodiments of this application is not limited thereto. Any network structure that can implement functions of the foregoing network elements is applicable to embodiments of this application.

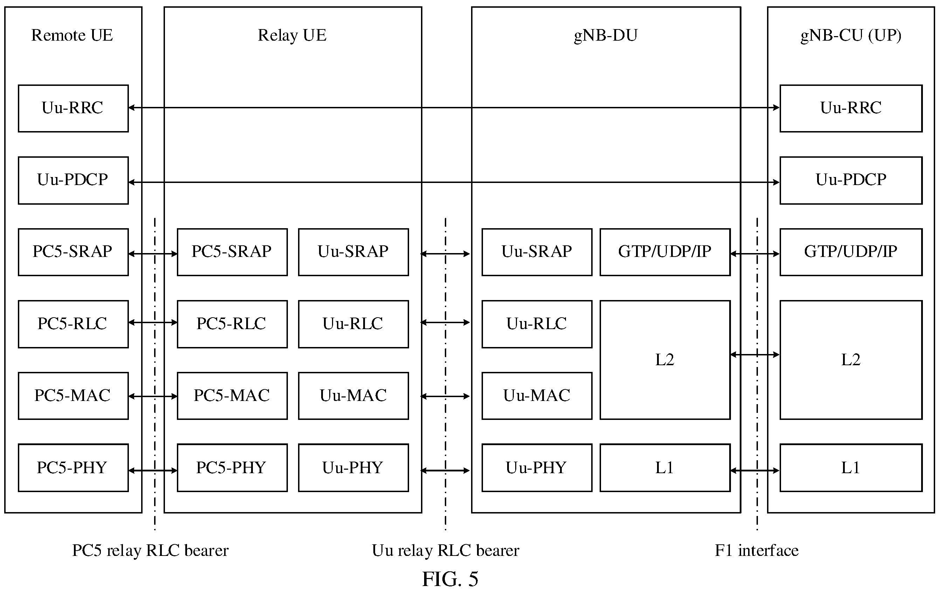

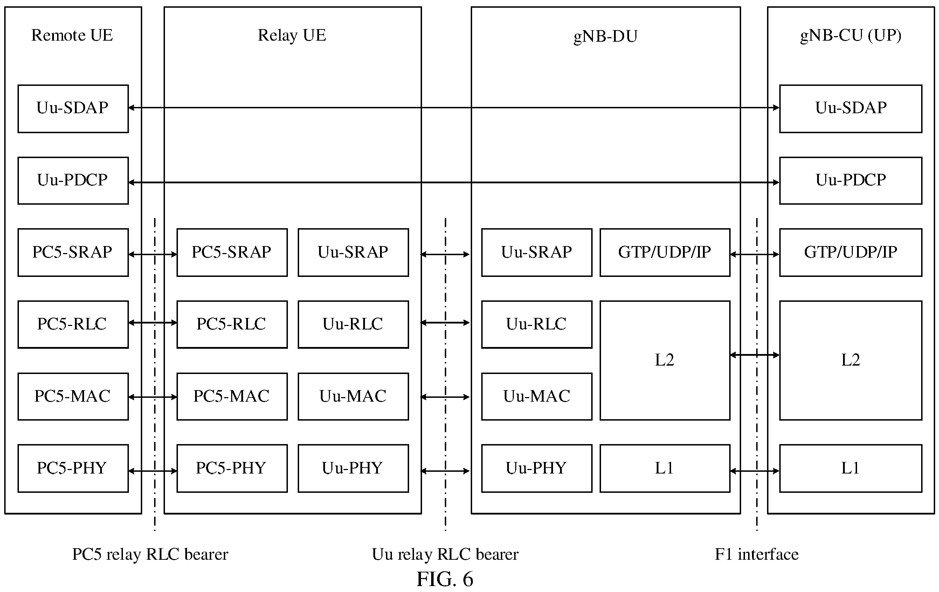

FIG. 5 is a diagram of a user plane protocol stack architecture in a CU-DU split architecture. FIG. 6 is a diagram of a control plane protocol stack architecture in a CU-DU split architecture.

The protocol stack architecture has been described above. For some descriptions, refer to the foregoing descriptions. Only differences of the protocol stack architectures in the CU-DU split architecture are described herein.

As shown in FIG. 5 and FIG. 6, in the CU-DU split architecture, a protocol stack architecture of a base station may further include a general packet radio service tunneling protocol user plane (general packet radio service tunneling protocol user plane, GTP-U) layer, a user datagram protocol (user datagram protocol, UDP) layer, a network interconnection protocol (internet protocol, IP) layer, an L2 (layer 2) layer, and an L1 (layer 1) layer. The L2 layer is a link layer. For example, the L2 layer may be a data link layer in an open communication system interconnection (open system interconnection, OSI) reference model. The L1 layer may be a physical layer. For example, the L1 layer may be a physical layer in the OSI reference model.

In the CU-DU split architecture, a gNB-CU is responsible for an RRC layer, an SDAP layer, and a PDCP layer, and a gNB-DU is responsible for an RLC layer, a MAC layer, and a PHY layer. For a control plane, a gNB-CU-CP is responsible for the RRC and a PDCP entity corresponding to an SRB; and for a user plane, a gNB-CU-UP is responsible for the SDAP layer and a PDCP entity corresponding to a DRB.

In the CU-DU split architecture, an SRAP layer is located on a DU side, and the gNB-CU determines configuration information of the SRAP layer; the gNB-DU determines a configuration of a PC5/Uu relay RLC bearer based on an indication of the gNB-CU; and the gNB-CU allocates a local ID of a remote UE, sends an F1AP message to the remote UE to perform SRAP layer configuration and PC5 RLC bearer configuration on the remote UE, and sends an F1AP message to a relay UE to perform SRAP layer configuration and PC5/Uu RLC bearer configuration on the relay UE.

Refer to FIG. 5 and FIG. 6. On an indirect link, an end-to-end SRAP layer, RLC layer, MAC layer, and PHY layer between the remote UE and the relay UE may also be respectively referred to as a PC5-SRAP layer, a PC5-RLC layer, a PC5-MAC layer, and a PC5-PHY layer. On the indirect link, an end-to-end SRAP layer, RLC layer, MAC layer, and PHY layer between the relay UE and the base station may also be respectively referred to as a Uu-SRAP layer, a Uu-RLC layer, a Uu-MAC layer, and a Uu-PHY layer.

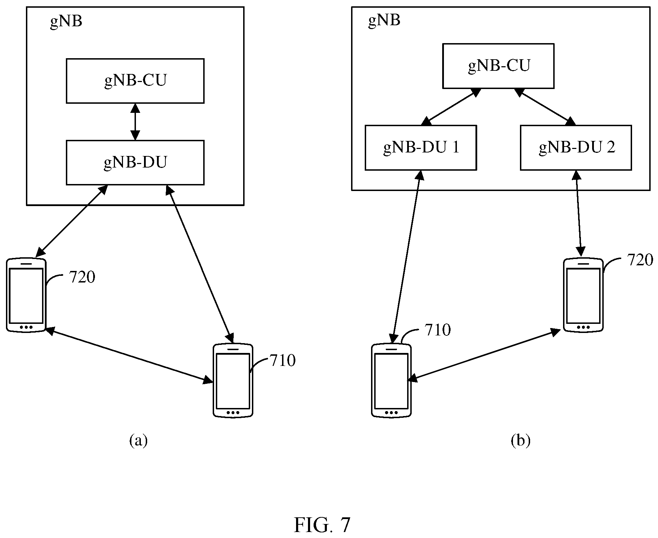

FIG. 7 is a diagram of communication between a remote terminal device and a base station in a CU-DU split architecture. As shown in FIG. 7, the base station includes two parts: a CU and a DU. The CU may be connected to the DU through an F1 interface, and one CU may be connected to one or more DUs.

A plurality of communication links may be established between a remote UE 710 and the base station. For example, the remote UE 710 may be connected to the base station through both a direct link and an indirect link. There are two cases of multiple paths between the remote UE 710 and the base station. In one case, as shown in (a) in FIG. 7, the remote UE 710 may be connected to a gNB-DU via a relay UE 720, and the remote UE 710 may alternatively be directly connected to the gNB-DU. In other words, the remote UE and the relay UE 720 may be connected to a same gNB-DU connected to a same gNB-CU. This scenario is referred to as an intra-gNB-DU scenario.

In the other case, as shown in (b) in FIG. 7, the remote UE 710 may be directly connected to a gNB-DU 1, and the remote UE 710 may alternatively be connected to a gNB-DU 2 via a relay UE 720. The gNB-DU 1 and the gNB-DU 2 share a same gNB-CU. In other words, the remote UE 710 and the relay UE 720 may be connected to different gNB-DUs connected to a same gNB-CU. This scenario is referred to as an inter-gNB-DU scenario.

In the intra-gNB-DU scenario, a direct link and an indirect link exist between the gNB-DU and the remote terminal device. When a radio bearer is newly set up or modified, the gNB-CU may explicitly indicate the gNB-DU to set up a PC5 relay RLC bearer corresponding to the radio bearer on the indirect link, but the gNB-DU cannot determine whether a configuration of a Uu RLC bearer corresponding to the radio bearer on the direct link needs to be provided.

In the inter-gNB-DU scenario, a direct link exists between the gNB-DU 1 and the remote UE, and an indirect link exists between the gNB-DU 2 and the remote UE. Both the gNB-DU 1 and the gNB-DU 2 need to send configurations related to a radio bearer to the gNB-CU. In a conventional solution, the gNB-DU 1 and the gNB-DU 2 include the configurations related to the radio bearer in same information elements. The gNB-CU may fail to identify and combine the two same information elements, and consequently, send only one of the information elements to the remote UE. This is not conducive for the remote UE to configure the radio bearer on the two links.

The following uses a case in which a base station establishes an indirect link to a remote UE when a direct link exists between the base station and the remote UE as an example for description.

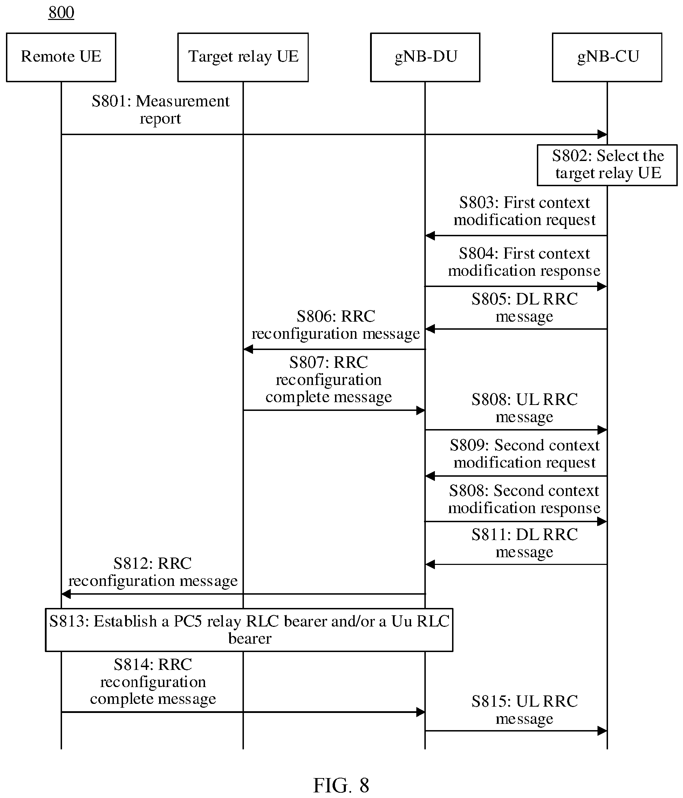

FIG. 8 shows a communication method according to an embodiment of this application. The method is applied to an intra-gNB-DU scenario, and the method includes the following steps.

S801: A remote UE sends a measurement report (measurement report) to a gNB-CU, and correspondingly, the gNB-CU receives the measurement report sent by the remote UE.

In this embodiment, a direct link already exists between the remote UE and a gNB-DU, and the remote UE may directly communicate with the gNB-DU through a Uu interface. The remote UE sends the measurement report to the gNB-CU via the gNB-DU, to request the gNB-CU to establish a new indirect link between the remote UE and the gNB-DU.

The measurement report may include information about one or more candidate relay UEs and/or information about one or more candidate cells. The information about the candidate relay UE may include one or more of the following: an L2 ID of the candidate relay UE, information about a serving cell of the relay UE, for example, an NR cell identity (NR cell identity, NCI) or an NR cell global identity (NR cell global identity, NCGI), and reference signal received power (reference signal received power, RSRP) of a sidelink between the remote UE and the candidate relay UE. The information about the serving cell may include one or more of the following: a cell identifier such as the NCI or the NCGI, and Uu interface signal quality measured by the remote UE in the candidate cell.

Based on the measurement report reported by the remote UE, the gNB-CU may trigger multi-path (multi-path) configuration. To be specific, when a link connection exists between a base station and the remote UE, the base station establishes a new link connection to the remote UE. For example, when an indirect link exists between the base station and the remote UE, the base station establishes a direct link to the remote UE. Alternatively, when a direct link exists between the base station and the remote UE, the base station establishes an indirect link to the remote UE. Alternatively, the base station directly establishes a plurality of communication links between the base station and the remote UE.

S802: The gNB-CU selects a target relay UE.

In this embodiment, after receiving the measurement report of the remote UE through forwarding by the gNB-DU, the gNB-CU may select a target relay UE (target relay UE) for the remote UE from the one or more candidate relay UEs based on the measurement report, and may further configure the target relay UE and the remote UE, to establish an indirect link between the remote UE, the target relay UE, and the base station.

Optionally, the gNB-CU may alternatively actively select a target relay UE for the remote UE based on information such as network quality of the remote UE on the direct link and a data transmission rate on a radio bearer, and may further configure the target relay UE and the remote UE, to establish an indirect link between the remote UE, the target relay UE, and the base station.

The gNB-CU may select an appropriate target relay UE based on the measurement report. For example, the gNB-CU may determine communication quality or radio signal strength between the remote UE and the one or more candidate relay UEs based on the RSRP between the remote UE and the one or more candidate relay UEs, and the gNB-CU may select a candidate relay UE with good communication quality or high radio signal strength as the target relay UE.

S803: The gNB-CU sends a first context modification request (context modification request (relay UE)) message to the gNB-DU, and correspondingly, the gNB-DU receives the first context modification request message sent by the gNB-CU.

The first context modification request message is a context modification request message corresponding to the target relay UE. The first context modification request message is associated with the target relay UE. For example, the context modification request message may carry F1AP ID information of the target relay UE, to distinguish from a context modification request message of another UE.

In a possible implementation, if the target relay UE is in a connected state (RRC_CONNECTED), the gNB-CU may perform relay configuration on the target relay UE.

In another possible implementation, if the target relay UE is in an idle state (RRC_IDLE) or an inactive state (RRC_INACTIVE), the base station needs to first perform configuration on a remote UE side (in other words, first perform S809 and subsequent steps), the remote UE triggers the target relay UE to enter a connected state, and then the base station performs relay configuration on a target relay UE side.

When the target relay UE is in the connected state, the gNB-CU sends the first context modification request message to the gNB-DU, to modify a context of the target relay UE in the gNB-DU.

In this embodiment of this application, the gNB-CU may determine a configuration of an SRAP layer on the target relay UE side. The configuration of the SRAP layer may include, for example, a mapping relationship between at least one radio bearer (SRB or DRB) of the remote UE and a Uu/PC5 relay RLC bearer. For example, an SRB 0 corresponds to a first PC5 relay RLC bearer, and the SRB 0 corresponds to a first Uu relay RLC bearer; an SRB 1 corresponds to a second PC5 relay RLC bearer, and the SRB 1 corresponds to a second Uu relay RLC bearer; and a DRB 1 and a DRB 2 correspond to a third PC5 relay RLC bearer, and the DRB 1 and the DRB 2 correspond to a third Uu relay RLC bearer.

It should be understood that the configuration of the SRAP layer may include a configuration of a PC5-SRAP layer and a configuration of a Uu-SRAP layer. The configuration of the Uu-SRAP layer may include the mapping relationship between the at least one radio bearer of the remote UE and the PC5 relay RLC bearer, and the configuration of the Uu-SRAP layer may include the mapping relationship between the at least one radio bearer of the remote UE and the Uu relay RLC bearer.

In this embodiment of this application, the at least one radio bearer may include, for example, one or more of a radio bearer 0, a radio bearer 1, a radio bearer 2, or a radio bearer 3. The PC5 relay RLC bearer and the Uu relay RLC bearer may be for carrying one or more radio bearers. In other words, a corresponding PC5 relay RLC bearer and a corresponding Uu relay RLC bearer may be separately set up for each radio bearer, or a same PC5 relay RLC bearer and a same Uu relay RLC bearer may be set up for a plurality of different radio bearers.

It should be understood that the mapping relationship between the at least one radio bearer of the remote UE and the Uu/PC5 relay RLC bearer may be a mapping relationship between an ID of the at least one radio bearer (an SRB ID or a DRB ID) of the remote UE and an ID of the Uu/PC5 relay RLC bearer.

The first context modification request message may further indicate the gNB-DU to generate or update a configuration of the PC5 relay RLC bearer and a configuration of the Uu relay RLC bearer that are on the target relay UE side. For example, the first context modification request message may include the ID of the PC5 relay RLC bearer and the ID of the Uu relay RLC bearer, and indicate the gNB-DU to generate a configuration of the PC5 relay RLC bearer and a configuration of the Uu relay RLC bearer that correspond to the IDs.

It should be understood that, because the indirect link is newly established between the remote UE and the gNB-DU, the gNB-CU may reconfigure the radio bearer of the remote UE, and determine a link on which data of the radio bearer of the remote UE is transmitted. If it is determined that the data of the radio bearer of the remote UE needs to be transmitted on the indirect link, the gNB-CU may indicate, by using the first context modification request message, the gNB-DU to provide the configuration of the PC5 relay RLC bearer and the configuration of the Uu relay RLC bearer that need to be configured on the relay UE side and that correspond to the radio bearer of the remote UE. Alternatively, the gNB-CU may indicate to the gNB-DU that the radio bearer of the remote UE may reuse a PC5 relay RLC bearer and a Uu relay RLC bearer that have been originally set up by the target relay UE.

The first context modification request message may further include quality of service (quality of service, QoS) information that the PC5 relay RLC bearer and the Uu relay RLC bearer need to meet. The gNB-DU may determine the configuration of the PC5 relay RLC bearer and the configuration of the Uu relay RLC bearer based on the QoS information.

Optionally, the first context modification request message may further indicate which remote UE connected to the target relay UE corresponds to the PC5 relay RLC bearer on the target relay UE side. For example, when the gNB-CU indicates the gNB-DU to determine the PC5 relay RLC bearer, ID information of the remote UE may be carried.

S804: The gNB-DU sends a first context modification response (context modification response (relay UE)) message to the gNB-CU, and correspondingly, the gNB-CU receives the first context modification response message sent by the gNB-DU.

The gNB-DU may generate the configuration of the PC5 relay RLC bearer and the configuration of the Uu relay RLC bearer of the target relay UE based on the first context modification request message of the target relay UE, and send the generated configurations to the gNB-CU by using the first context modification response message.

The configuration of the PC5 relay RLC bearer and the configuration of the Uu relay RLC bearer may include one or more of the following information: an ID of the Uu relay RLC bearer, an ID of the PC5 relay RLC bearer, a configuration of a Uu-RLC entity, a configuration of a PC5-RLC entity, a logical channel identity (logical channel identity, LCID) corresponding to the Uu relay RLC bearer, a logical channel identity corresponding to the PC5 relay RLC bearer, a configuration of a logical channel corresponding to the Uu relay RLC bearer or the PC5 relay RLC bearer, and the like.

The configuration of the Uu-RLC entity or the PC5-RLC entity may include an RLC mode and a corresponding parameter. The RLC mode may include an acknowledged mode (acknowledged mode, AM), an unacknowledged mode (unacknowledged mode, UM), and the like. The corresponding parameter may include a length of a sequence number (sequence number, SN) field, a timer (timer) for retransmission poll, a maximum quantity of retransmissions, and the like. Configuration information of the logical channel may include a logical channel priority, a prioritized bit rate, and the like.

S805: The gNB-CU sends a downlink RRC message to the gNB-DU (DL RRC message transfer).

The downlink RRC message may carry an RRC reconfiguration (RRCReconfiguration) message sent to the target relay UE. The RRC reconfiguration message may include configuration information of the PC5 relay RLC bearer and the Uu relay RLC bearer of the target relay UE, to indicate the target relay UE to configure the PC5 relay RLC bearer and the Uu relay RLC bearer based on the configuration information.

S806: The gNB-DU sends the RRC reconfiguration message to the target relay UE.

Optionally, the RRC reconfiguration message may alternatively be an RRC setup (RRCsetup) message.

S807: The target relay UE sends an RRC reconfiguration complete (RRCReconfigurationComplete) message to the gNB-DU, to indicate that reconfiguration is completed.

S808: The gNB-DU sends an uplink RRC message to the gNB-CU (UL RRC message transfer).

The uplink RRC message may carry the RRC reconfiguration complete message. The gNB-DU may forward the RRC reconfiguration complete message.

In this embodiment of this application, the target relay UE may set up the PC5 relay RLC bearer and the Uu relay RLC bearer based on the configuration information of the PC5 relay RLC bearer and the Uu relay RLC bearer. This includes setting up an RLC entity, reconfiguring or setting up a logical channel, or the like. The target relay UE may send the RRC reconfiguration complete message to the gNB-CU by using S807 and S808, to indicate that the PC5 relay RLC bearer and the Uu relay RLC bearer on the target relay UE side have been set up. Therefore, based on the foregoing configuration, the target relay UE may provide a relay service for the remote UE on the indirect link.

The following steps S809 and S810 are for generating required multi-path configuration information for the remote UE.

S809: The gNB-CU sends a second context modification request (context modification request (remote UE)) message to the gNB-DU, and correspondingly, the gNB-DU receives the second context modification request message sent by the gNB-CU.

The second context modification request message is a context modification request message corresponding to the remote UE, and is for modifying a context of the remote UE. The second context modification request message is associated with the remote UE. For example, the second context modification request message may carry F1AP ID information of the remote UE, to distinguish from a context modification request message of another UE.

In this embodiment of this application, the gNB-CU may determine configuration information required by the remote UE to establish the indirect link, for example, a configuration of an SRAP layer on the remote UE side. The configuration of the SRAP layer may include the mapping relationship between the radio bearer (SRB or DRB) of the remote UE and the PC5 relay RLC bearer. The second context modification request message may include the configuration of the SRAP layer on the remote UE side. The configuration of the SRAP layer has been described in S803. For details, refer to the related descriptions of S803. Details are not described herein again.

The second context modification request message may further include an ID of the PC5 relay RLC bearer and QoS information that the PC5 relay RLC bearer needs to meet, to indicate the gNB-DU to provide a configuration of the PC5 relay RLC bearer. The gNB-DU may determine the configuration of the PC5 relay RLC bearer based on the QoS information. In other words, on the indirect link, the gNB-DU may determine, based on an indication of the gNB-CU, whether the configuration of the PC5 relay RLC bearer corresponding to the radio bearer needs to be provided.

It should be understood that a corresponding PC5 relay RLC bearer needs to be set up for both the remote UE and the target relay UE.

It should be understood that a plurality of PC5 relay RLC bearers may be set up between the remote UE and the target relay UE, and each PC5 relay RLC bearer may correspond to at least one radio bearer.

In this embodiment of this application, the remote UE may be connected to a plurality of target relay UEs, and PC5 relay RLC bearers between the remote UE and different target relay UEs may use a same ID of a PC5 relay RLC bearer. To distinguish between the PC5 relay RLC bearers of the plurality of target relay UEs, ID information of the target relay UE (for example, an L2 ID of the target relay UE), ID information of a serving cell of the target relay UE, or an index (index) allocated by the gNB-CU to the target relay UE connected to the remote UE may be used. For example, if the ID of the PC5 relay RLC bearer is x, an ID of a first target relay UE is y, and an ID of a second target relay UE is z, xy or y may be used as identification information of a PC5 relay RLC bearer between the remote UE and the first target relay UE, and xz or z may be used as identification information of a PC5 relay RLC bearer between the remote UE and the second target relay UE.

It should be understood that, when the remote UE is connected to the plurality of target relay UEs, a corresponding PC5 relay RLC bearer needs to be set up between the remote UE and each different target relay UE.

The second context modification request message may further include first indication information, and the first indication information may indicate the gNB-DU to newly set up or modify the radio bearer of the remote UE. For example, the first context modification request message may carry a radio bearer setup list or a radio bearer modification list, for example, an SRB to Be Setup List/DRB to Be Setup List or SRB to Be Modified List/DRB to Be Modified List information element (information element, IE), to indicate the gNB-DU to newly set up or modify the radio bearer of the remote UE. The radio bearer setup list or the radio bearer modification list may further carry QoS information that each radio bearer needs to meet.

In this embodiment of this application, because the new link is added between the remote UE and the gNB-DU, the gNB-CU needs to determine a link on which data of the radio bearer of the remote UE is transmitted, namely, a link on which the radio bearer is configured. Based on configuration situations of the radio bearer on the two links, configuration types of the radio bearer may include the following:
(1) First configuration type: The radio bearer is configured only on the direct link.
(2) Second configuration type: The radio bearer is configured only on the indirect link.
(3) Third configuration type: The radio bearer is configured on the direct link and the indirect link.

The gNB-CU may determine the configuration type of the radio bearer based on a quality of service requirement of the radio bearer. For example, if the radio bearer 1 requires a low delay, the gNB-CU may configure the radio bearer 1 as the third configuration type; or if communication quality of the direct link is better, the gNB-CU may configure the radio bearer 1 as the first configuration type.

In this embodiment of this application, the third configuration type may include that the radio bearer is configured to perform PDCP duplication or configured to perform PDCP split.

The PDCP duplication may also be referred to as packet duplication, to be specific, a data packet is repeatedly sent once. In other words, when the radio bearer is configured to perform PDCP duplication, a data packet may be transmitted to an RLC entity, the data packet is duplicated once, and a data packet obtained through duplication is transmitted to another RLC entity. In this embodiment, when the radio bearer is configured to perform PDCP duplication, the data packet is transmitted to the PC5 relay RLC bearer, and the data packet obtained through duplication is transmitted to a Uu RLC bearer.

When the radio bearer is configured to perform PDCP split, each data packet is randomly transmitted to the PC5 relay RLC bearer or a Uu RLC bearer.

It should be understood that, because two communication links exist between the gNB-DU and the remote UE, when receiving the indication information indicating to newly set up or modify the radio bearer of the remote UE, the gNB-DU does not determine a link on which an RLC bearer needs to be configured for the radio bearer that is indicated by the gNB-CU to set up or modify. If the radio bearer is configured on the indirect link (corresponding to the second configuration type and the third configuration type), the gNB-CU may include, in the second context modification request message, the ID of the PC5 relay RLC bearer and the QoS information that the PC5 relay RLC bearer needs to meet, to indicate the gNB-DU to determine the configuration of the PC5 relay RLC bearer. However, when the radio bearer is configured on the direct link (corresponding to the first configuration type and the third configuration type), the gNB-DU does not determine whether a configuration of the Uu RLC bearer corresponding to the radio bearer needs to be provided.

In a possible implementation, the first indication information may include the configuration type of the radio bearer of the remote UE, and the gNB-DU may determine, based on the configuration type of the radio bearer, whether the corresponding configuration of the Uu RLC bearer on the direct link needs to be provided for the radio bearer.

In this embodiment of this application, the first indication information may indicate the configuration type of the radio bearer by using 2-bit indication information or Boolean indication information. For example, 0 indicates the first configuration type, 1 indicates the second configuration type, and 2 indicates the third configuration type. For another example, 0 indicates the first configuration type, 1 indicates the second configuration type, 2 indicates the PDCP duplication, and 3 indicates the PDCP split.

For example, when the radio bearer 1 of the remote UE is configured as the first configuration type, the gNB-DU needs to provide a configuration of a Uu RLC bearer corresponding to the radio bearer 1, namely, a configuration of an RLC bearer on the direct link; when the radio bearer 1 is configured as the second configuration type, the gNB-DU needs to provide a configuration of a PC5 relay RLC bearer corresponding to the radio bearer 1, namely, a configuration of an RLC bearer on the indirect link; or when the radio bearer 1 is configured as the second configuration type, the gNB-DU needs to provide a configuration of a PC5 relay RLC bearer and a configuration of a Uu RLC bearer.

In other words, when the radio bearer is of the first configuration type and the third configuration type, the gNB-DU needs to provide the configuration of the Uu RLC bearer on the direct link.

In a possible implementation, the first indication information may indicate whether the gNB-DU needs to provide the configuration of the Uu RLC bearer corresponding to the radio bearer. For example, the first indication information may be Boolean indication information, where true indicates that the gNB-DU needs to determine and provide the configuration of the Uu RLC bearer corresponding to the radio bearer, and false indicates that the Uu RLC bearer corresponding to the radio bearer does not need to be provided. In a possible scenario, if the remote terminal is connected to the gNB-DU through a plurality of direct links, the first indication information may further indicate a quantity of Uu RLC bearers, to indicate the gNB-DU to provide a plurality of corresponding configurations of the Uu RLC bearers, each configuration of the Uu RLC bearer corresponds to one link between the remote terminal and the gNB-DU.

In a possible implementation, the first indication information may explicitly indicate the gNB-DU to determine the configuration of the Uu RLC bearer corresponding to the radio bearer. Specifically, the first indication information may indicate that a link identifier of the Uu RLC bearer needs to be provided, and the link identifier is determined by the gNB-CU. Similarly, in the scenario in which the remote terminal is connected to the gNB-DU through the plurality of direct links, the gNB-CU may indicate identifiers of the plurality of direct links.

In a possible implementation, the first indication information may explicitly indicate that the gNB-DU does not provide the configuration of the Uu RLC bearer corresponding to the radio bearer.

When determining that the configuration of the Uu RLC bearer corresponding to the radio bearer needs to be provided, the gNB-DU may determine the configuration of the Uu RLC bearer based on the QoS information corresponding to the radio bearer.

Optionally, the second context modification request message may further include multi-path indication information, and the multi-path indication information indicates that the radio bearer of the remote UE is configured in a switching scenario or a multi-path scenario. In this embodiment of this application, the multi-path indication information may also be referred to as path addition indication information.

Optionally, the multi-path indication information may indicate that a newly set up or reconfigured radio bearer is used in a scenario of providing a multi-path configuration for the remote UE, indicate to add an indirect link or a direct link for the remote UE, indicate to add a new communication link for the remote UE, or indicate the gNB-DU to determine the multi-path configuration or a switching configuration for the remote UE.

The multi-path indication information may perform indication in the following manners. For example, if the first context modification request message does not include the multi-path indication information (for example, the multi-path indication information is 0, or is indicated by using a specific IE name), the radio bearer of the remote UE is configured in the switching scenario. The switching scenario may include switching from a direct link to an indirect link or switching from the indirect link to the direct link. Different identifiers may be further used for the multi-path indication information to distinguish between the two types of switching. For example, if the first context modification request message includes the multi-path indication information (for example, the multi-path indication information is 1 or is indicated by using a specific IE name), the radio bearer of the remote UE is configured in the multi-path scenario, so that the gNB-DU can provide, for the remote UE or the target relay UE, a configuration corresponding to the multi-path scenario.

The gNB-DU may provide, by using the multi-path indication information, a configuration corresponding to a scenario for the radio bearer of the remote UE. For example, if the multi-path indication information indicates that the radio bearer of the remote UE is configured in a scenario of switching from the direct link to the indirect link, the gNB-DU provides a switching related configuration, for example, includes configuration information in a switching configuration related information element, and provides the configuration of the Uu/PC5 relay RLC bearer corresponding to the radio bearer. If the multi-path indication information indicates that the radio bearer of the remote UE is configured in the multi-path scenario, even if all radio bearers of the remote UE are configured on one link, the gNB-DU needs to provide a multi-path related configuration, for example, include configuration information in a multi-path configuration related information element.

Optionally, the second context modification request message may further include the ID information of the target relay UE, to indicate a target relay UE to which the remote UE establishes a communication connection, for example, establishes a unicast connection.

S810: The gNB-DU sends a second context modification response (context modification response (remote UE)) message to the gNB-CU, and correspondingly, the gNB-CU receives the second context modification response message sent by the gNB-DU.

It should be understood that the second context modification response message may include the configuration of the PC5 relay RLC bearer and/or the configuration of the Uu RLC bearer that correspond/corresponds to the radio bearer of the remote UE.

The configuration of the Uu RLC bearer may include one or more of the following information: an ID of the Uu RLC bearer, a configuration of a Uu-RLC entity, a logical channel identity (logical channel identity, LCID) corresponding to the Uu RLC bearer, a configuration of a logical channel corresponding to the Uu RLC bearer, and the like.

The configuration of the Uu-RLC entity may include an RLC mode and a corresponding parameter. The RLC mode may include an AM, a UM, and the like. The corresponding parameter may include a length of an SN field, a timer (timer) for retransmission poll, a maximum quantity of retransmissions, and the like. Configuration information of the logical channel may include a logical channel priority, a prioritized bit rate, and the like. The same applies to the PC5 relay RLC bearer, and details are not described herein again.

S811: The gNB-CU sends a downlink RRC message to the gNB-DU (DL RRC message transfer).

The downlink RRC message may carry an RRC reconfiguration (RRCReconfiguration) message sent to the remote UE.

S812: The gNB-DU sends the RRC reconfiguration message to the remote UE.

The RRC reconfiguration message may include the configuration of the PC5 relay RLC bearer and/or the configuration of the Uu RLC bearer of the remote UE.

Optionally, the RRC reconfiguration message may alternatively be an RRC setup (RRCsetup) message.

S813: Set up the PC5 relay RLC bearer and/or the Uu RLC bearer.

In this embodiment of this application, the remote UE may set up the PC5 relay RLC bearer and/or the Uu RLC bearer based on the configuration information of the PC5 relay RLC bearer and/or the Uu RLC bearer. This includes setting up an RLC entity, reconfiguring or setting up a logical channel, or the like.

S814: The remote UE sends an RRC reconfiguration complete (RRCReconfigurationComplete) message to the gNB-DU.

S815: The gNB-DU sends an uplink RRC message to the gNB-CU (UL RRC message transfer).

The uplink RRC message may carry the RRC reconfiguration complete message. The gNB-DU may forward the RRC reconfiguration complete message. The remote UE may send the RRC reconfiguration complete message to the gNB-CU by using S814 and S815, to indicate that the PC5 relay RLC bearer and/or the Uu RLC bearer on the remote UE side have been set up.

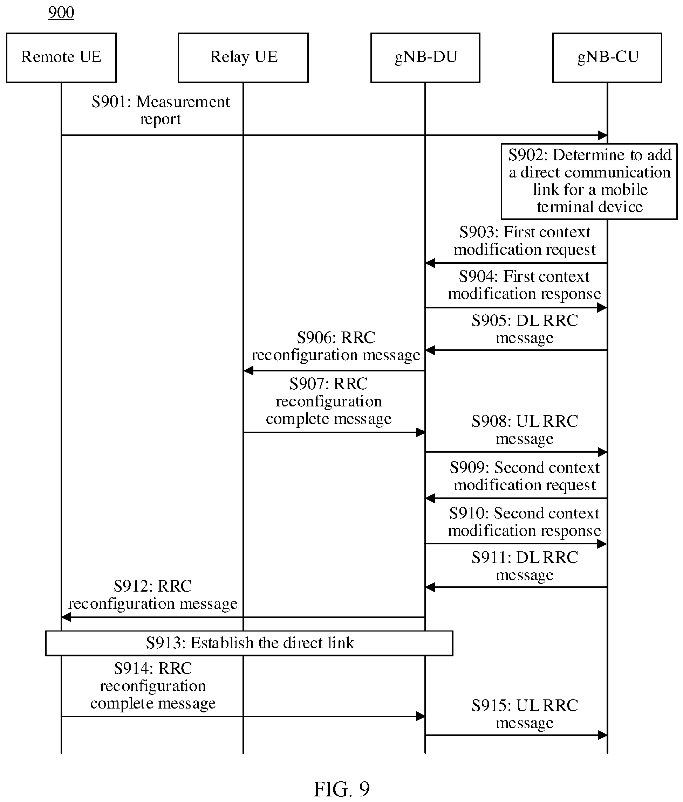

FIG. 9 shows a communication method according to an embodiment of this application. The method is applied to an intra-gNB-DU scenario, and the method includes the following steps.

S901: A remote UE sends a measurement report to a gNB-CU, and correspondingly, the gNB-CU receives the measurement report sent by the remote UE.

In this embodiment, an indirect link already exists between the remote UE and a gNB-DU, and the remote UE may communicate with the gNB-DU via a relay UE. The remote UE sends the measurement report to the gNB-CU via the relay UE and the gNB-DU, to request the gNB-CU to establish a new direct link between the remote UE and the gNB-DU.

S902: The gNB-CU determines to newly add the direct link between the gNB-DU and the remote UE.

After receiving the measurement report, the gNB-CU may determine, based on radio signal strength between the remote UE and the currently connected relay UE or between the remote UE and one or more candidate cells, whether to newly add the direct link for the remote UE. For example, if the radio signal strength between the remote UE and the currently connected relay UE is weak, the gNB-CU may determine to newly add the direct link between the gNB-DU and the remote UE.

It should be understood that S901 is an optional step. Alternatively, the gNB-CU may actively newly add the direct link for the remote UE.

S903: The gNB-CU sends a first context modification request message to the gNB-DU, and correspondingly, the gNB-DU receives the first context modification request message sent by the gNB-CU.

S904: The gNB-DU sends a first context modification response message to the gNB-CU, and correspondingly, the gNB-CU receives the first context modification response message sent by the gNB-DU.

S905: The gNB-CU sends a downlink RRC message to the gNB-DU.

S906: The gNB-DU sends an RRC reconfiguration message to the relay UE.

S907: The relay UE sends an RRC reconfiguration complete (RRCReconfigurationComplete) message to the gNB-DU.

S908: The gNB-DU sends an uplink RRC message to the gNB-CU (UL RRC message transfer).

It should be understood that, similar to steps S803 to S808, steps S903 to S908 are a reconfiguration procedure on a relay UE side, including indicating the gNB-DU to determine a configuration of a PC5/Uu relay RLC bearer. For steps S903 to S908, refer to the related descriptions of steps S803 to S808. Details are not described herein again.

S909: The gNB-CU sends a second context modification request message to the gNB-DU, and correspondingly, the gNB-DU receives the second context modification request message sent by the gNB-CU.

S910: The gNB-DU sends a second context modification response message to the gNB-CU, and correspondingly, the gNB-CU receives the second context modification response message sent by the gNB-DU.

S911: The gNB-CU sends a downlink RRC message to the gNB-DU.

S912: The gNB-DU sends an RRC reconfiguration message to the remote UE.

S913: Establish the direct link between the remote UE and the gNB-DU.

S914: The remote UE sends an RRC reconfiguration complete message to the gNB-DU.

S915: The gNB-DU sends an uplink RRC message to the gNB-CU.

It should be understood that, similar to steps S809 to S815, steps S909 to S915 are a reconfiguration procedure on a remote UE side. For details, refer to the related descriptions of steps S809 to S815. Only differences are described herein.

In this embodiment, the direct link is newly added between the remote UE and the gNB-DU. Therefore, when receiving, from the gNB-CU, indication information indicating to newly set up or modify a radio bearer of the remote UE, the gNB-DU still does not determine whether a configuration of a Uu RLC bearer on the direct link needs to be provided. For the indirect link, the gNB-CU may include, in the second context modification request message, an ID of a PC5 relay RLC bearer and QoS information that the PC5 relay RLC bearer needs to meet, to indicate the gNB-DU to determine a configuration of the PC5 relay RLC bearer. Therefore, the gNB-CU may send first indication information to the gNB-DU, to indicate a configuration type of the radio bearer of the remote UE, indicate whether the gNB-DU needs to provide the configuration of the Uu RLC bearer corresponding to the radio bearer, or explicitly indicate the gNB-DU to determine the configuration of the Uu RLC bearer corresponding to the radio bearer. A manner is similar to that in S809, and details are not described herein again.

In this embodiment, because the direct link is newly added, the gNB-CU does not need to indicate ID information of a target relay UE to the gNB-DU and the remote UE. After receiving the RRC reconfiguration message, the remote UE accesses a cell indicated by a base station, in other words, establishes the direct link connection to the gNB-DU in this embodiment, and sets up the PC5 relay RLC bearer and the Uu RLC bearer based on the configuration of the PC5 relay RLC bearer and the configuration of the Uu RLC bearer that are included in the RRC reconfiguration message.

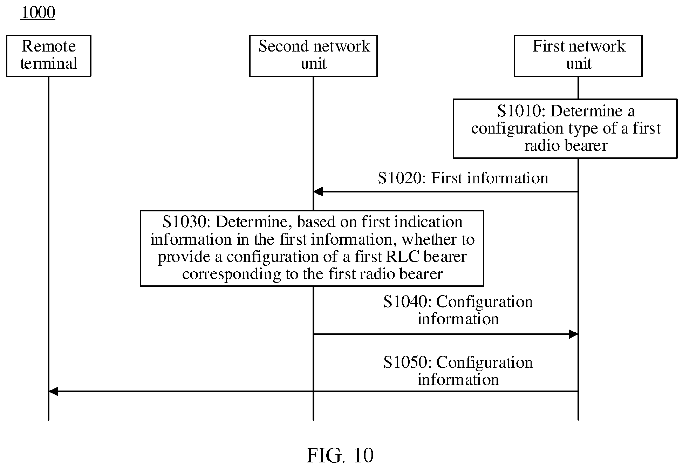

FIG. 10 shows a communication method according to an embodiment of this application. The method is applied to an inter-gNB-DU scenario, and the method includes the following steps.

S1010: A first network unit determines a configuration type of a first radio bearer.

In this embodiment of this application, a remote terminal device may communicate with a second network unit through a first link and a second link. The first link is a link between the remote terminal device and the second network unit, and the second link is a link through which the second network unit is connected to the remote terminal device via a relay terminal device.

In this embodiment of this application, the first network unit may be the gNB-CU in the embodiment shown in FIG. 8 or FIG. 9, the second network unit may be the gNB-DU in the embodiment shown in FIG. 8 or FIG. 9, the first link may be a direct link, and the second link may be an indirect link. On the first link, the remote terminal device may communicate with the second network unit through a Uu interface. On the second link, the remote terminal device may communicate with the second network unit via the relay terminal device.

The first network unit may determine the configuration type of the first radio bearer of the remote terminal device. The configuration type of the first radio bearer may be one of a first configuration type, a second configuration type, and a third configuration type. The first configuration type is that a radio bearer is configured on the first link, the second configuration type is that a radio bearer is configured on the second link, and the third configuration type is that a radio bearer is configured on the first link and the second link.

Optionally, the third configuration type may include that the radio bearer is configured to perform PDCP duplication or configured to perform PDCP split.

Optionally, the first network unit may further determine a configuration of an SRAP layer of the remote terminal device, where the configuration of the SRAP layer includes a mapping relationship between the first radio bearer and a second RLC bearer, for example, a correspondence between an ID of the first radio bearer and an ID of the second RLC bearer. The second RLC bearer is an RLC bearer between the remote terminal device and the relay terminal device, for example, the PC5 relay RLC bearer in the embodiment shown in FIG. 8 or FIG. 9.

It should be understood that the first radio bearer may correspond to one or more second RLC bearers.

S1020: The first network unit sends first information to the second network unit. In this embodiment of this application, the first information may be the second context modification request message of the remote UE sent by the gNB-CU to the gNB-DU in the embodiment shown in FIG. 8 or FIG. 9.

The first information may indicate the second network unit to provide a configuration of an RLC bearer corresponding to the first radio bearer of the remote terminal device, and the configuration of the RLC bearer is related to the configuration type of the first radio bearer.

It should be understood that the configuration of the RLC bearer corresponding to the first radio bearer may include a configuration of a first RLC bearer and/or a configuration of the second RLC bearer. The first RLC bearer is an RLC bearer on the direct link between the remote terminal device and the second network unit, for example, the Uu RLC bearer in the embodiment shown in FIG. 8 or FIG. 9. The second RLC bearer is the RLC bearer between the remote terminal device and the relay terminal device, for example, the PC5 relay RLC bearer in the embodiment shown in FIG. 8 or FIG. 9.

That the configuration of the RLC bearer corresponding to the first radio bearer is related to the configuration type of the first radio bearer may be understood as follows: If the configuration type of the first radio bearer is the first configuration type, the configuration of the RLC bearer includes the configuration of the first RLC bearer. If the configuration type of the first radio bearer is the second configuration type, the configuration of the RLC bearer includes the configuration of the second RLC bearer. If the configuration type of the first radio bearer is the third configuration type, the configuration of the RLC bearer includes the configuration of the first RLC bearer and the configuration of the second RLC bearer.

In this embodiment of this application, the first information includes first indication information. The first indication information may have the following several indication manners.

In a possible implementation, the first indication information indicates the configuration type of the first radio bearer.

In a possible implementation, the first indication information indicates whether the first radio bearer is configured on the first link.

In a possible implementation, the first indication information indicates the second network unit to determine the configuration of the first RLC bearer corresponding to the first radio bearer, or the first indication information may indicate the second network unit not to provide the configuration of the first RLC bearer corresponding to the first radio bearer.

Optionally, the first information may further include second indication information, where the second indication information indicates the second network unit to determine the configuration of the second RLC bearer corresponding to the first radio bearer.

In this embodiment of this application, based on the configuration type of the first radio bearer, content of the first information has the following several cases. If the first radio bearer is of the first configuration type, the first information includes the first indication information. If the first radio bearer is of the second configuration type, the first information includes the first indication information and the second indication information. If the first radio bearer is of the third configuration type, the first information includes the first indication information and the second indication information.

In other words, the first information definitely includes the first indication information, and may include the second indication information.

Optionally, the first network unit may further send second information to the second network unit, where the second information indicates the second network unit to perform multi-path configuration or switching configuration for the remote terminal device.

Optionally, the first network unit may send the configuration of the SRAP layer to the remote terminal device, where the configuration of the SRAP layer includes the mapping relationship between the first radio bearer and the second RLC bearer.

S1030: The second network unit determines, based on the first indication information in the first information, whether to provide the configuration of the first RLC bearer corresponding to the first radio bearer.

In a possible implementation, the first indication information indicates the configuration type of the first radio bearer, and the second network unit determines, based on the configuration type of the first radio bearer, whether to provide the configuration of the first RLC bearer corresponding to the first radio bearer. When the configuration type of the first radio bearer is the first configuration type and the third configuration type, the second network unit determines the configuration of the first RLC bearer corresponding to the first radio bearer. When the configuration type of the first radio bearer is the second configuration type, the second network unit determines not to provide the configuration of the first RLC bearer corresponding to the first radio bearer.

In a possible implementation, the first indication information indicates whether the first radio bearer is configured on the first link. When the first indication information indicates that the first radio bearer is configured on the first link, the second network unit determines to provide the configuration of the first RLC bearer corresponding to the first radio bearer. When the first indication information indicates that the first radio bearer is not configured on the first link, the second network unit determines not to provide the configuration of the first RLC bearer corresponding to the first radio bearer.

In a possible implementation, the first indication information indicates the second network unit to determine the configuration of the first RLC bearer corresponding to the first radio bearer, or the first indication information may indicate the second network unit not to provide the configuration of the first RLC bearer corresponding to the first radio bearer. The second network unit may determine, based on the first indication information, whether to provide the configuration of the first RLC bearer. For example, the first indication information may include an ID of the first RLC bearer and QoS information of the first radio bearer. When receiving the first indication information, the second network unit generates the corresponding configuration of the first RLC bearer based on the ID of the first RLC bearer and the QoS information of the first radio bearer.

It should be understood that, when determining to provide the configuration of the first RLC bearer, the second network unit should generate the configuration of the first RLC bearer.

Optionally, the first indication information may further include first QoS information. The first QoS information may be QoS information of the first RLC bearer corresponding to the first radio bearer or the QoS information corresponding to the first radio bearer, to indicate that the configuration of the first RLC bearer needs to meet the first QoS information.

It should be understood that, when determining to provide the configuration of the first RLC bearer, the second network unit generates the configuration of the first RLC bearer based on the first QoS information.

Optionally, the second indication information may further include second QoS information. The second QoS information is QoS information of the second RLC bearer corresponding to the first radio bearer or the QoS information corresponding to the first radio bearer, to indicate that the configuration of the second RLC bearer needs to meet the second QoS information.

It should be understood that, when receiving the second indication information, the second network unit generates the configuration of the first RLC bearer based on the first QoS information.

S1040: The second network unit sends configuration information to the first network unit, and correspondingly, the first network unit receives the configuration information from the second network unit.

It should be understood that, when the first radio bearer is of the first configuration type, the configuration information includes the configuration of the first RLC bearer. When the first radio bearer is of the second configuration type, the configuration information includes the configuration of the second RLC bearer. When the first radio bearer is of the third configuration type, the configuration information includes the configuration of the first RLC bearer and the configuration of the second RLC bearer.

It should be understood that the configuration information may further include configurations of RLC bearers corresponding to a plurality of radio bearers. For example, if the first radio bearer is of the first configuration type, a second radio bearer is of the second configuration type, and a third radio bearer is of the third configuration type, the configuration information may include the configuration of the first RLC bearer corresponding to the first radio bearer, a configuration of a second RLC bearer corresponding to the second radio bearer, and a configuration of a first RLC bearer and a configuration of a second RLC bearer that correspond to the third radio bearer.

S1050: The first network unit sends the configuration information to the remote terminal device, and correspondingly, the remote terminal device receives the configuration information from the first network unit.

It should be understood that the remote terminal device may set up the first RLC bearer and/or the second RLC bearer based on the configuration information.

Optionally, the remote terminal device receives the configuration of the SRAP layer from the first network unit, where the configuration of the SRAP layer includes the mapping relationship between the first radio bearer and the second RLC bearer. The remote terminal device may configure the SRAP layer based on the configuration of the SRAP layer.

The following uses an example in which a direct link exists between a remote UE and a gNB-DU 1 and an indirect link between the remote UE and a gNB-DU 2 is newly set up in an inter-gNB-DU scenario for description.

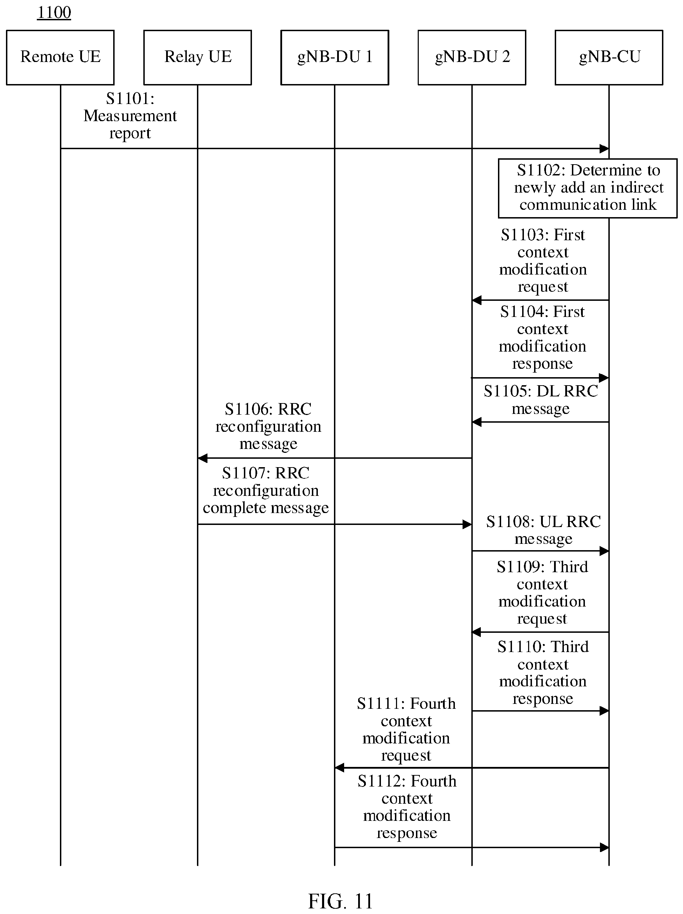

FIG. 11 shows a communication method according to an embodiment of this application. The method is applied to an inter-gNB-DU scenario, and the method includes the following steps.

S1101: A remote UE sends a measurement report to a gNB-CU, and correspondingly, the gNB-CU receives the measurement report sent by the remote UE.

In this embodiment, a direct link already exists between the remote UE and a gNB-DU 1, and the remote UE may directly communicate with the gNB-DU 1 through a Uu interface. A relay UE may also communicate with a gNB-DU 2 through a Uu interface. The remote UE sends the measurement report to the gNB-CU via the gNB-DU 1, to request the gNB-CU to establish a new indirect link for the remote UE.

It should be understood that the gNB-DU 1 and the gNB-DU 2 are different DUs connected to a same gNB-CU.

It should be understood that, in this embodiment, one or more candidate relay UEs each may communicate with the DU connected to the gNB-CU through a Uu interface. In other words, the one or more candidate relay UEs may be communicatively connected to a base station through a direct link.

The measurement report may include information about the one or more candidate relay UEs and/or information about one or more candidate cells. The information about the candidate relay UE may include one or more of the following: an L2 ID of the candidate relay UE, information about a serving cell of the relay UE, for example, an NR cell identity (NR cell identity, NCI) or an NR cell global identity (NR cell global identity, NCGI), and reference signal received power (reference signal received power, RSRP) of a sidelink between the remote UE and the candidate relay UE. The information about the candidate cell may include one or more of the following: a cell identifier such as the NCI or the NCGI, and Uu interface signal quality measured by the remote UE in the candidate cell.

S1102: The gNB-CU determines to newly add an indirect communication link for the remote UE.

After receiving the measurement report, the gNB-CU may determine to newly add the indirect communication link for the remote UE, and then select an appropriate target relay UE for the remote UE from the one or more candidate relay UEs, to newly establish the indirect link for the remote UE. For a process of selecting the target relay UE, refer to the related descriptions of step S802. Details are not described herein again.

In this embodiment, the determined target relay UE and the remote UE are connected to different gNB-DUs. As shown in FIG. 7, the remote UE is connected to the gNB-DU 1, and the target relay UE is connected to the gNB-DU 2.

It should be understood that, in step 1102, after the gNB-CU determines to newly add the indirect communication link for the remote UE, the gNB-CU may determine a configuration type of a radio bearer of the remote UE. For example, all radio bearers of the remote UE are originally configured on the direct link, and the gNB-CU may determine which radio bearers need to be configured on the indirect link, or the gNB-CU may determine which radio bearers need to be configured to perform PDCP duplication or PDCP split.

S1103: The gNB-CU sends a first context modification request message to the gNB-DU 2, and correspondingly, the gNB-DU 2 receives the first context modification request message sent by the gNB-CU. The first context modification request message is associated with the target relay UE, and the first context modification request message is used by the gNB-CU to indicate the gNB-DU 2 to generate a configuration required by a target relay UE side.

S1104: The gNB-DU 2 sends a first context modification response message to the gNB-CU, and correspondingly, the gNB-CU receives the first context modification response message sent by the gNB-DU 2.

S1105: The gNB-CU sends a downlink RRC message to the gNB-DU 2.

S1106: The gNB-DU 2 sends an RRC reconfiguration message to the relay UE.

S1107: The relay UE sends an RRC reconfiguration complete message to the gNB-DU.

S1108: The gNB-DU 2 sends an uplink RRC message to the gNB-CU.

It should be understood that, similar to steps S803 to S808, steps S1103 to S1108 are also a reconfiguration procedure on the relay UE side. To be specific, the gNB-DU 2 may generate a configuration of a PC5/Uu relay RLC bearer on the relay UE side based on the first context modification request message of the relay UE. For steps S1103 to S1108, refer to the related descriptions of steps S803 to S808.

S1109: The gNB-CU sends a third context modification request message to the gNB-DU 2, and correspondingly, the gNB-DU 2 receives the third context modification request message sent by the gNB-CU. If a context setup procedure between the remote terminal and the gNB-CU and the gNB-DU 2 is not completed before S1109, the gNB-CU may alternatively send a third context setup request message to the gNB-DU 2 in the procedure. The following uses the third context modification request message as an example for description.

The third context modification request message is a context modification request message corresponding to the remote UE. The third context modification request message is associated with the remote UE. For example, the context modification request message may carry F1AP ID information of the remote UE, to distinguish from a context modification request message of another UE.

In this embodiment, the gNB-CU may configure the remote UE on the indirect link by interacting with the gNB-DU 2.

The gNB-CU may determine a configuration of an SRAP layer on a remote UE side, including a mapping relationship between an ID of the radio bearer (an SRB **ID** or a DRB ID) of the remote UE and an ID of a PC5 relay RLC bearer. Then, the gNB-CU may include, in the third context modification request message, the ID of the PC5 relay RLC bearer and QoS information that the PC5 relay RLC bearer need to meets, to indicate the gNB-DU to determine a configuration of the PC5 relay RLC bearer.

The gNB-CU may further indicate, by using the third context modification request message, to newly set up or modify the radio bearer. For example, the third context modification request message may include a radio bearer setup list or a radio bearer modification list, for example, an SRB to Be Setup List/DRB to Be Setup List or SRB to Be Modified List/DRB to Be Modified List IE, to indicate the gNB-DU 2 to set up or modify the radio bearer of the remote UE on the indirect link.

It should be understood that a radio bearer in the radio bearer setup list or the radio bearer modification list is a radio bearer of a second configuration type or a radio bearer of a third configuration type, namely, a radio bearer that needs to be configured on the indirect link.

Optionally, the third context modification request message may further include multi-path indication information, to indicate the gNB-DU 2 to perform multi-path configuration or switching configuration for the remote UE.

S1110: The gNB-DU 2 sends a third context modification response message to the gNB-CU, and correspondingly, the gNB-CU receives the third context modification response message sent by the gNB-DU 2.

The gNB-DU 2 may determine the configuration of the PC5 relay RLC bearer based on the ID of the PC5 relay RLC bearer and the QoS information corresponding to the PC5 relay RLC bearer that are indicated by the gNB-CU. The gNB-DU 2 may generate a CellGroupConfig IE including the configuration of the PC5 relay RLC bearer, and then send the CellGroupConfig IE to the gNB-CU by using the third context modification response message.

It should be understood that the CellGroupConfig IE generated by the gNB-DU 2 may include a configuration of a PC5 relay RLC bearer corresponding to one or more radio bearers of the second configuration type or the third configuration type.

S1111: The gNB-CU sends a fourth context modification request message to the gNB-DU 1, and correspondingly, the gNB-DU 1 receives the fourth context modification request message sent by the gNB-CU.

The fourth context modification request message is a context modification request message corresponding to the remote UE. The fourth context modification request message is associated with the remote UE. For example, the context modification request message may carry the F1AP ID information of the remote UE, to distinguish from the context modification request message of the another UE.

In this embodiment, the gNB-CU may configure the remote UE on the direct link by interacting with the gNB-DU 1.

The fourth context modification request message may include a radio bearer setup list or a radio bearer modification list, for example, an SRB to Be Setup List/DRB to Be Setup List or SRB to Be Modified List/DRB to Be Modified List IE, to indicate the gNB-DU 1 to set up or modify the radio bearer of the remote UE on the direct link.

It should be understood that a radio bearer in the radio bearer setup list or the radio bearer modification list is a radio bearer of a first configuration type or a radio bearer of the third configuration type, namely, a radio bearer that needs to be configured on the direct link.

Optionally, the third context modification request message may further include the multi-path indication information, to indicate the gNB-DU 2 to perform multi-path configuration or switching configuration for the remote UE.

S1112: The gNB-DU 1 sends a fourth context modification response message to the gNB-CU, and correspondingly, the gNB-CU receives the fourth context modification response message sent by the gNB-DU 1.

The gNB-DU 1 may determine, based on the radio bearer setup list or the radio bearer modification list, a configuration of a Uu RLC bearer corresponding to each radio bearer in the list. The gNB-DU 2 may generate a CellGroupConfig IE including the configuration of the Uu RLC bearer, and then send the CellGroupConfig IE to the gNB-CU by using the fourth context modification response message.

It should be understood that the CellGroupConfig IE generated by the gNB-DU 1 may include a configuration of a Uu RLC bearer corresponding to one or more radio bearers of the first configuration type or the third configuration type.

In the inter-gNB-DU scenario, the gNB-CU may receive CellGroupConfig IEs sent by two different DUs. However, the gNB-CU cannot parse the two CellGroupConfig IEs, and consequently, cannot combine the two CellGroupConfig IEs into one CellGroupConfig IE or send the CellGroupConfig IE to the remote UE. Alternatively, the gNB-CU may send only one of the CellGroupConfig IEs to the remote UE. In other words, the remote UE may fail to receive complete configurations of RLC bearers on two links.

To resolve the foregoing problem, the gNB-CU may indicate the gNB-DU 1 and the gNB-DU 2 to include configurations of RLC bearers on different links in different information elements. For example, the gNB-CU may indicate the gNB-DU 1 to include the configuration of the Uu RLC bearer in a first information element, and indicate the gNB-DU 2 to include the configuration of the PC5 relay RLC bearer in a second information element.

For example, the gNB-CU may indicate that a primary link of the remote UE is on a gNB-DU 1 side, and a secondary link of the remote UE is on a gNB-DU 2 side. A DU on the primary link needs to include a configuration of an RLC bearer on the primary link in a CellGroupConfig-firstPath IE. In other words, the gNB-DU1 includes the configuration of the Uu RLC bearer in the CellGroupConfig-firstPath IE. A DU on the secondary link needs to include a configuration of an RLC bearer on the secondary link in a CellGroupConfig-SecondaryPath IE. In other words, the gNB-DU 2 includes the configuration of the PC5 relay RLC bearer in the CellGroupConfig-SecondaryPath IE. In this way, the gNB-CU may parse the two information elements to obtain the configurations of the RLC bearers on the two links, and send the configurations to the remote UE by using an RRC message.

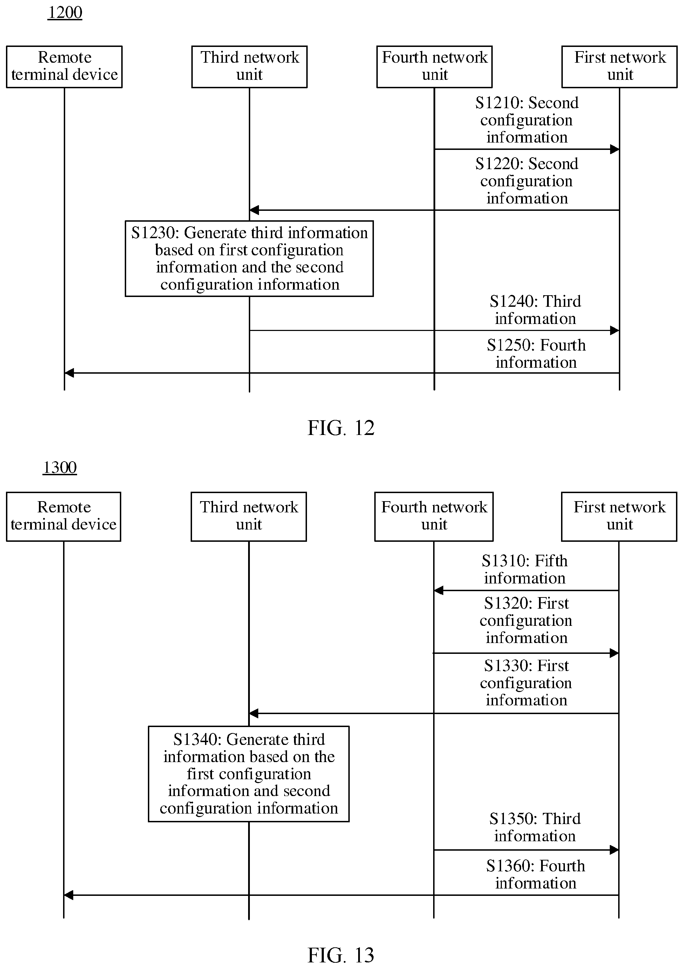

An embodiment of this application further provides a communication method. A first network unit (corresponding to a gNB-CU) may receive configuration information of a radio bearer on two links from a third network unit (corresponding to a gNB-DU 1) or a fourth network unit (corresponding to a gNB-DU 2), to provide complete configuration information for a remote UE. FIG. 12 shows a communication method according to an embodiment of this application. The method includes the following steps.

S1210: A third network unit sends first configuration information to a first network unit, and correspondingly, the first network unit receives the first configuration information from the third network unit.

S1220: The first network unit sends the first configuration information to a fourth network unit, and correspondingly, the fourth network unit receives the first configuration information.

In this embodiment of this application, a remote terminal device may communicate with a second network unit through a third link and a fourth link. The third link is a link between the remote terminal device and the third network unit, and the fourth link is a link through which the fourth network unit is connected to the remote terminal device via a relay terminal device.

In this embodiment of this application, the first network unit may be the gNB-CU in the embodiment shown in FIG. 11, the third network unit may be the gNB-DU 1, and the fourth network unit may be the gNB-DU 2. The third link may be a direct link, and the fourth link may be an indirect link. On the third link, the remote terminal device may communicate with the third network unit through a Uu interface. On the fourth link, the remote terminal device may communicate with the second network unit via the relay terminal device.

The first configuration information may be the CellGroupConfig IE generated by the gNB-DU 1 in the embodiment shown in FIG. 11. In other words, the first configuration information may include configurations of one or more Uu RLC bearers generated by the third network unit. In this embodiment, the Uu RLC bearer may also be referred to as a third RLC bearer.

It should be understood that steps S1210 and S1220 are a process in which the third network unit sends the first configuration information to the fourth network unit via the first network unit, and the first network unit performs a forwarding function in the process.

Optionally, the fourth network unit may send second configuration information to the third network unit via the first network unit.

In this embodiment of this application, the second configuration information may be the CellGroupConfig IE generated by the gNB-DU 2 in the embodiment shown in FIG. 11. In other words, the second configuration information may include configurations of one or more PCS relay RLC bearers generated by the fourth network unit. In this embodiment, the PCS relay RLC bearer may be referred to as a fourth RLC bearer.

It should be understood that the first network unit may choose to send, to the fourth network unit, the first configuration information generated by the third network unit, or the first network unit may choose to send the second configuration information of the fourth network unit to the third network unit.

In a possible implementation, the first network unit receives configuration information of a network unit on a side of a previously established link, and then sends the configuration information to a network unit on a side of a later added link. For example, the direct link already exists between the third network unit and the remote terminal, and the indirect link between the fourth network unit and the remote terminal device is added later. The first network unit may receive the first configuration information of the third network unit, and send the first configuration information to the fourth network unit.

In a possible implementation, the first network unit may randomly select one of the third network unit and the fourth network unit, and then send the configuration information corresponding to the one of the third network unit and the fourth network unit to the other network unit.

In a possible implementation, the first network unit always sends first received configuration information to the other network unit. For example, the first network unit first receives the first configuration information sent by the third network unit, and sends the first configuration information to the fourth network unit.

In a possible implementation, the first network unit always sends, to the other network unit, the configuration information generated by one of the third network unit and the fourth network unit, and the other network unit generates third information including the two types of configuration information.

S1230: The fourth network unit generates the third information based on the first configuration information and the second configuration information.

It should be understood that the fourth network unit may generate, based on the first configuration information generated by the third network unit and the second configuration information generated by the fourth network unit, the third information including the first configuration information and the second configuration information.

For example, the gNB-DU 2 may generate a new CellGroupConfig IE based on the CellGroupConfig IE generated by the gNB-DU 1 and the CellGroupConfig IE generated by the gNB-DU 2. The new CellGroupConfig IE may include configurations carried in the CellGroupConfig IEs generated by the two different DUs.

Optionally, the third network unit generates the third information based on the first configuration information and the second configuration information.

S1240: The fourth network unit sends the third information to the first network unit, and correspondingly, the first network unit receives the third information from the fourth network unit.

Optionally, the third network unit sends the third information to the first network unit, and correspondingly, the first network unit receives the third information from the third network unit.

S1250: The first network unit sends fourth information to the remote terminal device, and correspondingly, the remote terminal device receives the fourth information from the first network unit.

The fourth information may include the first configuration information and the second configuration information. In other words, the remote terminal device may receive complete configurations of the RLC bearers on the two links.

In this embodiment of this application, the fourth information may be an RRC reconfiguration message or an RRC setup message sent by the first network unit to the remote terminal device.

Optionally, the fourth information may further include an ID of a target relay UE, to indicate the remote UE to establish a connection to the target relay UE.

Optionally, the fourth information may further include a configuration of an SRAP layer, and the configuration of the SRAP layer includes a mapping relationship between each radio bearer of the remote terminal device and one or more fourth RLC bearers.

FIG. 13 shows a communication method according to an embodiment of this application. The method includes the following steps.

S1310: A first network unit sends fifth information to a fourth network unit, and correspondingly, the fourth network unit receives the fifth information from the first network unit.

Optionally, the first network unit sends the fifth information to the third network unit, and correspondingly, the third network unit receives the fifth information from the first network unit.

The fifth information may indicate that the third network unit or the fourth network unit is a primary network unit, or the fifth information may indicate that a link on a third network unit side or a link on a fourth network unit side is a primary link, and a network unit on the primary link is the primary network unit. Correspondingly, a network unit other than the primary network unit in the third network unit and the fourth network unit is a secondary network unit, or a link other than the primary link in the two links is a secondary link. Alternatively, the fifth information may indicate that the third network unit or the fourth network unit is a secondary network unit, or the fifth information may indicate that a link on a third network unit side or a link on a fourth network unit side is a secondary link, and a network unit on the secondary link is the secondary network unit.

In some embodiments, the first network unit always sends, to the primary network unit, configuration information generated by the secondary network unit, and the primary network unit generates third information and sends the third information to the first network unit.

In some other embodiments, the first network unit always sends, to the secondary network unit, configuration information generated by the primary network unit, and the secondary network unit generates third information and sends the third information to the first network unit.

In some embodiments, the first network unit always sends, to a network unit on a secondary link side, configuration information generated by a network unit on a primary link side, and the network unit on the secondary link side generates third information and sends the third information to the first network unit.

In some other embodiments, the first network unit always sends, to a network unit on a primary link side, configuration information generated by a network unit on a secondary link side, and the network unit on the primary link side generates third information and sends the third information to the first network unit.

In other words, the first network unit may specify a network unit that generates the third information including first configuration information and second configuration information, and obtain the third information, to provide complete configuration information of a radio bearer for a remote terminal device.

Optionally, the first network unit sends sixth information to the fourth network unit and/or the third network unit, to indicate the fourth network unit and the third network unit to perform multi-path configuration or switching configuration for the remote terminal device. The sixth information may be the multi-path indication information in the embodiment shown in FIG. 8 or FIG. 11. For details, refer to the related descriptions of step S809. Details are not described herein again.

The following uses an example in which the fifth information indicates that the third network unit is the primary network unit for description.

S1320: The fourth network unit sends the second configuration information to the first network unit, and correspondingly, the first network unit receives the second configuration information from the fourth network unit.

S1330: The first network unit sends the second configuration information to the third network unit, and correspondingly, the third network unit receives the second configuration information.

It should be understood that, when the fifth information indicates that the third network unit is the primary network unit, the fourth network unit is the secondary network unit.

It should be understood that the fourth network unit may determine, based on the fifth information, that the fourth network unit is the secondary network unit, or the fourth network unit may determine, depending on whether the fifth information is received, that the fourth network unit is the secondary network unit.

S1340: The third network unit generates the third information based on the first configuration information and the second configuration information.

It should be understood that the primary network unit specified by the first network unit always performs step S1340, and correspondingly, the secondary network unit performs step S1320. Alternatively, the secondary network unit specified by the first network unit performs step 1340, and correspondingly, the primary network unit performs step S1320. In this embodiment, only a first case is used as an example for description.

S1350: The third network unit sends the third information to the first network unit, and correspondingly, the first network unit receives the third information from the third network unit.

S1360: The first network unit sends fourth information to the remote terminal device, and correspondingly, the remote terminal device receives the fourth information from the first network unit.

Steps S1340 to S1360 are similar to steps S1230 to S1250. For details, refer to the related descriptions of steps S1230 to S1250. Details are not described herein again.

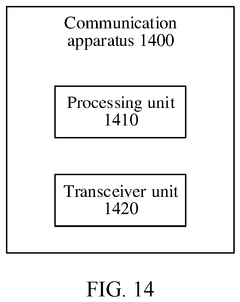

FIG. 14 is a block diagram of a communication apparatus according to an embodiment of this application. As shown in FIG. 14, the communication apparatus 1400 may include a processing unit 1410 and a transceiver unit 1420.

In a possible design, the communication apparatus 1400 corresponds to the first network device in the foregoing method embodiments, for example, a gNB-CU, or a chip disposed in the first network unit.

It should be understood that the communication apparatus 1400 may include units configured to perform the methods performed by the gNB-CU or the first network unit in the communication methods in FIG. 8, FIG. 9, FIG. 10, FIG. 11, FIG. 12, and FIG. 13. In addition, the units in the communication apparatus 1400 and the foregoing other operations and/or functions are respectively for implementing corresponding procedures of the communication methods in FIG. 8, FIG. 9, FIG. 10, FIG. 11, FIG. 12, and FIG. 13.

When the communication apparatus 1400 is configured to perform the communication method in FIG. 8, the processing unit 1410 may be configured to perform S802, and the transceiver unit 1420 may be configured to perform S801, S803 to S805, S808 to S811, and S815. When the communication apparatus 1400 is configured to perform the communication method in FIG. 9, the processing unit 1410 may be configured to perform S902, and the transceiver unit 1420 may be configured to perform S901, S903 to S905, S908 to S911, and S915. When the communication apparatus 1400 is configured to perform the communication method in FIG. 10, the processing unit 1410 may be configured to perform S1010, and the transceiver unit 1420 may be configured to perform S1020, S1040, and S1050. When the communication apparatus 1400 is configured to perform the communication method in FIG. 11, the processing unit 1410 may be configured to perform S1102, and the transceiver unit 1420 may be configured to perform S1101, S1103 to S1105, and S1108 to S1112. When the communication apparatus 1400 is configured to perform the communication method in FIG. 12, the transceiver unit 1420 may be configured to perform S1210, S1220, S1230, and S1240. When the communication apparatus 1400 is configured to perform the communication method in FIG. 13, the transceiver unit 1420 may be configured to perform S1310 to S1330, S1350, and S1360.

It should be understood that specific processes in which the units perform the foregoing corresponding steps have been described in detail in the foregoing method embodiments. For brevity, details are not described herein again.

Optionally, the communication apparatus 1400 may further include a storage unit. The storage unit may be configured to store instructions or data. The processing unit may invoke the instructions or the data stored in the storage unit, to implement a corresponding operation.

In another possible design, the communication apparatus 1400 may correspond to the second network unit, the third network unit, or the fourth network unit in the foregoing method embodiments, for example, a gNB-DU, a gNB-DU 1, or a gNB-DU 2.

It should be understood that the communication apparatus 1400 may include units configured to perform the methods performed by the second network unit, the third network unit, or the fourth network unit in the communication methods in FIG. 8, FIG. 9, FIG. 10, FIG. 11, FIG. 12, and FIG. 13. In addition, the units in the communication apparatus 1400 and the foregoing other operations and/or functions are respectively for implementing corresponding procedures of the communication methods in FIG. 8, FIG. 9, FIG. 10, FIG. 11, FIG. 12, and FIG. 13.

When the communication apparatus 1400 is configured to perform the communication method in FIG. 8, the transceiver unit 1420 may be configured to perform S803 to S812, S814, and S815. When the communication apparatus 1400 is configured to perform the communication method in FIG. 9, the transceiver unit 1420 may be configured to perform S903 to S912, S914, and S915. When the communication apparatus 1400 is configured to perform the communication method in FIG. 10, the processing unit 1410 may be configured to perform S1030, and the transceiver unit 1420 may be configured to perform S1020, S1040, and S1050. When the communication apparatus 1400 is configured to perform the communication method in FIG. 11, the transceiver unit 1420 may be configured to perform S1103 to S1112. When the communication apparatus 1400 is configured to perform the communication method in FIG. 12, the processing unit 1410 may be configured to perform S1230, and the transceiver unit 1420 may be configured to perform S1210, S1220, S1240, and S1250. When the communication apparatus 1400 is configured to perform the communication method in FIG. 13, the processing unit 1410 may be configured to perform S1340, and the transceiver unit 1420 may be configured to perform S1310, S1320, S1330, S1350, and S1360.

It should be understood that specific processes in which the units perform the foregoing corresponding steps have been described in detail in the foregoing method embodiments. For brevity, details are not described herein again.

Optionally, the communication apparatus 1400 may further include a storage unit. The storage unit may be configured to store instructions or data. The processing unit may invoke the instructions or the data stored in the storage unit, to implement a corresponding operation.

In another possible design, the communication apparatus 1400 may correspond to the remote terminal device (or the remote UE) in the foregoing method embodiments, or a chip disposed in the remote terminal device (or the remote UE).

It should be understood that the communication apparatus 1400 may include units configured to perform the methods performed by the remote terminal device in the communication methods in FIG. 8, FIG. 9, FIG. 10, FIG. 11, FIG. 12, and FIG. 13. In addition, the units in the communication apparatus 1400 and the foregoing other operations and/or functions are respectively for implementing corresponding procedures of the communication methods in FIG. 8, FIG. 9, FIG. 10, FIG. 11, FIG. 12, and FIG. 13.

When the communication apparatus 1400 is configured to perform the communication method in FIG. 8, the processing unit 1410 may be configured to perform S813, and the transceiver unit 1420 may be configured to perform S812 and S814. When the communication apparatus 1400 is configured to perform the communication method in FIG. 9, the processing unit 1410 may be configured to perform S913, and the transceiver unit 1420 may be configured to perform S912 and S914. When the communication apparatus 1400 is configured to perform the communication method in FIG. 10, the transceiver unit 1420 may be configured to perform S1050. When the communication apparatus 1400 is configured to perform the communication method in FIG. 11, the transceiver unit 1420 may be configured to perform S1101. When the communication apparatus 1400 is configured to perform the communication method in FIG. 12, the transceiver unit 1420 may be configured to perform S1250. When the communication apparatus 1400 is configured to perform the communication method in FIG. 9, the transceiver unit 1420 may be configured to perform S1260.

Optionally, the communication apparatus 1400 may further include a storage unit. The storage unit may be configured to store instructions or data. The processing unit may invoke the instructions or the data stored in the storage unit, to implement a corresponding operation.

The foregoing embodiments may be used separately, or may be used in combination to implement different technical effects.

A specific structure of an execution body of the methods provided in embodiments of this application is not particularly limited in embodiments of this application, provided that communication can be performed according to the method provided in embodiments of this application by running a program that records code of the method provided in embodiments of this application. For example, the execution body of the methods provided in embodiments of this application may be a terminal device or a network device, or may be a functional module that is in the terminal device or the network device and that can invoke and execute a program.

Aspects or features of this application may be implemented as a method, an apparatus or a product that uses standard programming and/or engineering technologies. The term "product" used in this specification may cover a computer program that can be accessed from any computer-readable device, carrier, or medium.

The computer-readable storage medium may be any usable medium accessible by a computer, or a data storage device, such as a server or a data center, integrating one or more usable media. The usable medium (or the computer readable medium) may include but is not limited to, for example, various medium that can store program code such as a magnetic medium or a magnetic storage device (for example, a floppy disk, a hard disk (for example, a removable hard disk), or a magnetic tape), an optical medium (for example, an optical disc, a compact disc (compact disc, CD), a digital versatile disc (digital versatile disc, DVD)), a smart card and a flash memory device (for example, an erasable programmable read-only memory (erasable programmable read-only memory, EPROM), a card, a stick, or a key drive), a semiconductor medium (for example, a solid state drive (solid state drive, SSD)), a USB flash drive, a read-only memory (read-only memory, ROM), or a random access memory (random access memory, RAM).

The various storage media described in this specification may represent one or more devices and/or other machine-readable media that are configured to store information. The term "machine-readable medium" may include but is not limited to radio channels and various other media capable of storing, containing, and/or carrying instructions and/or data.

It should be understood that the memory mentioned in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include but is not limited to these memories and any memory of another appropriate type.

In several embodiments provided in this application, it should be understood that the disclosed apparatuses and methods may be implemented in other manners. For example, the described apparatus embodiments are merely examples. For example, division into the foregoing units is merely logical function division. During actual implementation, another division manner may be used. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. A part or all of the units may be selected based on an actual requirement to implement the solutions provided in this application.

In addition, function units in embodiments of this application may be integrated into one unit, or each unit may exist alone physically, or two or more units are integrated into one unit.

All or a part of the foregoing embodiments may be implemented by using software, hardware, firmware, or any combination thereof.

When software is for implementing the embodiments, all or a part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A communication method, wherein the method comprises:
sending, by a first network unit, first information to a second network unit, wherein the first information comprises first indication information, the first indication information indicates a configuration type of a first radio bearer of a remote terminal device, and the configuration type is one of a first configuration type, a second configuration type, or a third configuration type, wherein the first configuration type is that a radio bearer is configured on a first link, the second configuration type is that a radio bearer is configured on a second link, the third configuration type is that a radio bearer is configured on the first link and the second link, the first link is a link between the second network unit and the remote terminal device, and the second link is a link through which the second network unit is connected to the remote terminal device via a relay terminal device;
receiving, by the first network unit, configuration information from the second network unit, wherein the configuration information comprises a configuration of a first radio link control RLC bearer and/or a configuration of a second RLC bearer that correspond/corresponds to the first radio bearer, the configuration of the first RLC bearer is a configuration of an RLC bearer of the first radio bearer on the first link, and the configuration of the second RLC bearer is a configuration of an RLC bearer of the first radio bearer on the second link; and
sending, by the first network unit, the configuration information to the remote terminal device.

2. The method according to claim 1, wherein the method further comprises:
determining, by the first network unit, the configuration type of the first radio bearer.

3. The method according to claim 1 or 2, wherein the third configuration type is that the radio bearer is configured as packet data convergence protocol duplication PDCP duplication or packet data convergence protocol split PDCP split.

4. The method according to any one of claims 1 to 3, wherein the method further comprises:
sending, by the first network unit, second information to the second network unit and/or the remote terminal device, wherein the second information indicates to perform multi-path configuration or switching configuration for the remote terminal device.

5. The method according to any one of claims 1 to 4, wherein the first information further comprises second indication information, and the second indication information indicates to set up or reconfigure the second RLC bearer for the remote terminal device, or the second indication information indicates the second network unit to determine the configuration of the second RLC bearer.

6. The method according to any one of claims 1 to 5, wherein the first network unit sends first quality of service QoS information and/or second QoS information to the second network unit, the first QoS information indicates that the configuration of the first RLC bearer needs to meet the first QoS information, and the second QoS information indicates that the configuration of the second RLC bearer needs to meet the second QoS information.

7. The method according to any one of claims 1 to 6, wherein the method further comprises:
sending, by the first network unit, a configuration of a sidelink relay adaptation protocol SRAP layer on the second link to the remote terminal device, wherein the configuration of the SRAP layer comprises a mapping relationship between the first radio bearer and the second RLC bearer.

8. The method according to any one of claims 1 to 7, wherein the first network unit is a central unit CU, and the second network unit is a distributed unit DU.

9. A communication method, wherein the method comprises:
receiving, by a second network unit, first information from a first network unit, wherein the first information comprises first indication information, the first indication information indicates a configuration type of a first radio bearer of a remote terminal device, and the configuration type of the first radio bearer is one of a first configuration type, a second configuration type, and a third configuration type, wherein the first configuration type is that a radio bearer is configured on a first link, the second configuration type is that a radio bearer is configured on a second link, the third configuration type is that a radio bearer is configured on the first link and the second link, the first link is a link between the second network unit and the remote terminal device, and the second link is a link through which the second network unit is connected to the remote terminal device via a relay terminal device;
determining, by the second network unit based on the first indication information, whether to provide a configuration of a first RLC bearer corresponding to the first radio bearer, wherein the configuration of the first RLC bearer is a configuration of an RLC bearer of the first radio bearer on the first link; and
sending, by the second network unit, configuration information to the first network unit, wherein when the second network unit determines to provide the configuration of the first RLC bearer, the configuration information comprises the configuration of the first RLC bearer.

10. The method according to claim 9, wherein the third configuration type is that the radio bearer is configured as PDCP duplication or PDCP split.

11. The method according to claim 9 or 10, wherein the method further comprises:
receiving, by the second network unit, second information from the second network unit, wherein the second information indicates to perform multi-path configuration or switching configuration for the remote terminal device.

12. The method according to any one of claims 9 to 11, wherein the first information further comprises second indication information, and the second indication information indicates the second network unit to set up or reconfigure a second RLC bearer for the remote terminal device, or the second indication information indicates the second network unit to determine a configuration of the second RLC bearer, wherein the configuration of the second RLC bearer is a configuration of an RLC bearer corresponding to the first radio bearer on the second link; and
the configuration information further comprises the configuration of the second RLC bearer.

13. The method according to claim 12, wherein the method further comprises:
receiving, by the second network unit, first QoS information and/or second QoS information from the second network unit, wherein the first QoS information indicates that the configuration of the first RLC bearer needs to meet the first QoS information, and the second QoS information indicates that the configuration of the second RLC bearer needs to meet the second QoS information.

14. The method according to any one of claims 9 to 13, wherein the first network unit is a CU, and the second network unit is a DU.

15. A communication method, wherein the method comprises:
receiving, by a remote terminal device, configuration information from a first network unit via a second network unit, wherein the configuration information comprises a configuration of a first RLC bearer and/or a configuration of a second RLC bearer that correspond/corresponds to a first radio bearer of the remote terminal device, the configuration of the first RLC bearer is a configuration of an RLC bearer of the first radio bearer on a first link, the configuration of the second RLC bearer is a configuration of an RLC bearer of the first radio bearer on a second link, the first link is a link between the second network unit and the remote terminal device, the second link is a link through which the second network unit is connected to the remote terminal device via a relay terminal device, and a configuration type of the first radio bearer is one of a first configuration type, a second configuration type, and a third configuration type, wherein the first configuration type is that a radio bearer is configured on the first link, the second configuration type is that a radio bearer is configured on the second link, and the third configuration type is that a radio bearer is configured on the first link and the second link; and
setting up, by the remote terminal device, the first RLC bearer and/or the second RLC bearer based on the configuration information.

16. The method according to claim 15, wherein the method further comprises:
receiving, by the remote terminal device, second information from the first network unit, wherein the second information indicates to perform multi-path configuration or switching configuration.

17. The method according to claim 15 or 16, wherein the method further comprises:
receiving, by the remote terminal device, a configuration that is of an SRAP layer on the second link and that is sent by the first network unit, wherein the configuration of the SRAP layer comprises a mapping relationship between the first radio bearer and the second RLC bearer.

18. The method according to any one of claims 15 to 17, wherein the first network unit is a CU, and the second network unit is a DU.

19. A communication method, wherein the method comprises:
receiving, by a first network unit, first configuration information from a third network unit, and sending the first configuration information to a fourth network unit, wherein the first configuration information is for configuring a radio bearer of a remote terminal device on a third link, and the third link is a link between the remote terminal device and the third network unit; and
receiving, by the first network unit, third information from the fourth network unit, wherein the third information comprises the first configuration information and second configuration information, the second configuration information is for configuring the radio bearer of the remote terminal device on a fourth link, and the fourth link is a link between the remote terminal device and the fourth network unit, wherein
the remote terminal device communicates with the third network unit on the third link via a relay terminal device; or the remote terminal device communicates with the third network unit on the fourth link via a relay terminal device.

20. The method according to claim 19, wherein the method further comprises:
sending, by the first network unit, first indication information to the third network unit, wherein the first indication information indicates the third network unit to determine the first configuration information; and
sending, by the first network unit, second indication information to the fourth network unit, wherein the second indication information indicates the fourth network unit to determine the second configuration information.

21. The method according to claim 19 or 20, wherein the method further comprises:
determining, by the first network unit, that the third network unit or the fourth network unit is a primary network unit, or determining, by the first network unit, that the third link or the fourth link is a primary link; or
determining, by the first network unit, that the third network unit or the fourth network unit is a secondary network unit, or determining, by the first network unit, that the third link or the fourth link is a secondary link.

22. The method according to any one of claims 19 to 21, wherein the method further comprises:
sending, by the first network unit, fifth information to the third network unit or the fourth network unit, wherein the fifth information indicates that the third network unit or the fourth network unit is the primary network unit, or the fifth information indicates that the third link or the fourth link is the primary link; or
the fifth information indicates that the third network unit or the fourth network unit is the secondary network unit, or the fifth information indicates that the third link or the fourth link is the secondary link.

23. The method according to any one of claims 19 to 22, wherein the method further comprises:
sending, by the first network unit, sixth information to the third network unit and the fourth network unit, wherein the sixth information indicates to perform multi-path configuration or switching configuration for the remote terminal device.

24. The method according to any one of claims 19 to 23, wherein the first configuration information comprises configurations of one or more third RLC bearers on the third link, and the second configuration information comprises configurations of one or more fourth RLC bearers on the fourth link.

25. The method according to claim 24, wherein the method further comprises:
sending, by the first network unit, a configuration of an SRAP layer on the fourth link to the remote terminal device, wherein the configuration of the SRAP layer comprises a mapping relationship between each radio bearer of the remote terminal device and the one or more fourth RLC bearers.

26. The method according to any one of claims 19 to 25, wherein the first network unit is a CU, the third network unit is a first DU, and the fourth network unit is a second DU.

27. A communication method, wherein the method comprises:
receiving, by a fourth network unit, first configuration information from a third network unit, wherein the first configuration information is for configuring a radio bearer of a remote terminal device on a third link, and the third link is a link through which the third network unit is connected to the remote terminal device;
sending, by the fourth network unit, third information to a first network unit, wherein the third information comprises the first configuration information and second configuration information, the second configuration information is for configuring the radio bearer of the remote terminal device on a fourth link, and the fourth link is a link between the fourth network unit and the remote terminal device, wherein
the remote terminal device communicates with the third network unit on the third link or the fourth link via a relay terminal device.

28. The method according to claim 27, wherein the method further comprises:
receiving, by the fourth network unit, first indication information from the first network unit, wherein the first indication information indicates the fourth network unit to determine the second configuration information.

29. The method according to claim 27 or 28, wherein the method further comprises:
receiving, by the fourth network unit, fifth information from the first network unit, wherein the fifth information indicates that the fourth network unit is a primary network unit, or the fifth information indicates that the fourth link is a primary link; or
the fifth information indicates that the fourth network unit is a secondary network unit, or the fifth information indicates that the fourth link is a secondary link.

30. The method according to any one of claims 27 to 29, wherein the method further comprises:
receiving, by the fourth network unit, sixth information, wherein the sixth information indicates to perform multi-path configuration or switching configuration for the remote terminal device.

31. The method according to any one of claims 27 to 30, wherein the first network unit is a CU, the third network unit is a first DU, and the fourth network unit is a second DU.

32. A communication method, wherein the method comprises:
receiving, by a remote terminal device, fourth information from a first network unit, wherein the fourth information comprises first configuration information and second configuration information, the first configuration information is for configuring a radio bearer of the remote terminal device on a third link, the second configuration information is for configuring the radio bearer of the remote terminal device on a fourth link, the third link is a link between the remote terminal device and a third network unit, and the fourth link is a link through which the remote terminal device is connected to a fourth network unit via a relay terminal device; and
configuring, by the remote terminal device, the radio bearer of the remote terminal device based on the first configuration information and the second configuration information.

33. The method according to claim 32, wherein the method further comprises:
receiving, by the remote terminal device, sixth information from the first network unit, wherein the sixth information indicates to perform multi-path configuration or switching configuration.

34. The method according to claim 32 or 33, wherein the first configuration information comprises configurations of one or more third RLC bearers on the third link, and the second configuration information comprises configurations of one or more fourth RLC bearers on the fourth link; and
the configuring, by the remote terminal device, the radio bearer of the remote terminal device based on the first configuration information and the second configuration information comprises:
setting up, by the remote terminal device, the one or more third RLC bearers based on the configurations of the one or more third RLC bearers; and
setting up, by the remote terminal device, the one or more fourth RLC bearers based on the configurations of the one or more fourth RLC bearers.

35. The method according to claim 34, wherein the method further comprises:
receiving, by the remote terminal device, a configuration that is of an SRAP layer on the fourth link and that is sent by the first network unit, wherein the configuration of the SRAP layer comprises a mapping relationship between each radio bearer of the remote terminal device and the one or more fourth RLC bearers.

36. The method according to any one of claims 32 to 35, wherein the first network unit is a CU, the third network unit is a first DU, and the fourth network unit is a second DU.

37. A communication system, wherein the communication system comprises a first network unit, a second network unit, and a remote terminal device, the first network unit is configured to perform the communication method according to any one of claims 1 to 8, the second network unit is configured to perform the communication method according to any one of claims 9 to 14, and the remote terminal device is configured to perform the communication method according to any one of claims 15 to 18.
